# EUROPEAN PATENT SPECIFICATION

(11) **EP 2 369 554 B1**
(45) Date of publication and mention of the grant of the patent: **12.07.2017**
(21) Application number: 11159297.8
(22) Date of filing: 22.03.2011
(51) Int. Cl.: G07B 15/00

(54) **Internet based check in system and baggage drop**
Internet basiertes Einchecksystem und Gepäckaufgabe
Vérification de type Internet dans un système et chute à bagages

(30) Priority: 22.03.2010 GB 201004762; 22.03.2010 GB 201004766; 22.03.2010 GB 201004767; 22.03.2010 GB 201004764; 15.03.2011 GB 201104431; 22.03.2010 GB 201004763
(43) Date of publication of application: 28.09.2011
(73) Proprietor: PULSE.AERO LIMITED, Hove East Sussex, BN3 2BB (GB)
(72) Inventor: Hurley, Chris, Brighton East Sussex BN1 3TT (GB); Eke, Lawrence Anthony Parkhouse, Brighton BN1 3JH (GB)
(74) Representative: Hall, Matthew Benjamin

(56) References cited:
- WO-A1-2006/029639
- GB-A- 2 461 949
- US-A- 5 150 760
- US-A1- 2008 010 375

## Description

The present invention concerns a new, a check in system incorporating a kiosk and a remote computer system for processing passenger reservation details when a passenger is checking in for a flight. The system may also be used for checking in baggage for passengers that have already checked in before arriving at the airport. The present invention also relates to a remote computer system, as well as a computer program product.

Traditionally an airport departure lounge has taken the form of a large hall with a line of check-in desks provided along at least one side. These are often set out in zones operated by specific airlines. Each of the check-in desks is provided with a terminal for accessing passenger records via a computer network. They also typically include baggage weighing scales, usually mounted underneath a conveyer belt passing to the side of the check-in desk that is for delivering the baggage to the baggage handling services. As part of the normal check-in procedure, a passenger will have his or her bags counted and weighed by an operator working for the airline company, to check that the passenger is within the allowed baggage allowance for that airline for the ticket they are travelling on. More recently, it has become possible to check-in online by accessing the airline's website. However, if the passenger has baggage that needs to be checked-in, the passenger may still have to queue up at one of the manned check-in desks in order to drop off his or her baggage. This problem, or at least the perception of this problem, has restricted the uptake of passengers using self-service kiosks.

Excess baggage fees are becoming more popular with the airlines, particularly the budget airlines, as a way of seeking extra revenue from certain groups of passengers. The situation is made more complicated for passengers because each airline has developed its own baggage rules governing when and how much excess baggage fees it will charge. Moreover, it is not uncommon to find that when a passenger has exceeded their baggage allowance, they are either forced to repack and discard luggage in front of the rest of the queue, or they must pay for their excess baggage, sometimes at a different desk, before returning to complete the check-in procedure or bag drop. This can be frustrating to the passenger, with the potential to cause delays and the possibility for the passenger to miss their flight.

Having to queue for a manned check-in desk is never popular. Often, the check-in desks of one airline will be particularly busy whilst those of another are underused. The limited floor space in a departure lounge for the different airline zones means that the solution of providing additional check-in desks is usually not available. Common User Self-Service (CUSS) kiosks has been developed, which are non-airline specific kiosks that are usually arranged in a central region of the departure lounge between the zones of the manned airline check-in desks. Typically, these kiosks may include a passport reader, a touch-screen, a printer, and in some instances a card reader device, all arranged within a housing that resembles an ATM device. The card reader device of the CUSS kiosks is used purely for identifying a passenger from the credit card details; payment using these devices is not possible because they lack the security systems (e.g. chip and pin security system) and the connections to process a transaction. The CUSS kiosks have already proved successful in making more efficient use of floor space in the departure lounge and they are becoming more widely accepted by the public through use. However, there are still problems with the CUSS kiosks that need to be overcome.

One problem is that while the CUSS kiosk itself, i.e. the hardware and operating system software, is non-airline specific, the software application that is run on the kiosk by the passenger selecting the airline that he/she is flying with, is a software application that has been developed for the particular Departure Control System (DCS) chosen by the particular airline to be used at the particular airport.

The CUSS kiosk, operating system software and back-end servers provide a platform on which DCS-specific software operates. The airline chooses the DCS that they wish to use at each airport. Large full-service airlines tend to use the same DCS at all airports and the DCS will be hosted at a remote data centre. For smaller airlines, particularly low cost and charter, the choice of DCS will be based on the possibilities available at a particular airport and the choice of local handling agent. Some airports may offer a local DCS at the airport. Handlers may offer a local DCS that they host remotely for their operations at multiple airports. Hence an airline will typically have a single reservation system, but may make use of multiple DCSs depending on the choice of handler and airport.

This means that although the passenger becomes familiar with the concept of using a CUSS kiosk to process his/her flight details, the actual procedure for checking-in, selecting seats, choosing a meal, printing boarding passes, etc., is dictated by the software required for the chosen DCS. The position of the buttons on the screen, and the questions prompted on the screen of the kiosk may vary considerably from one airline or DCS to another. Consequently, the passenger's experience of the land-side process for checking-in or confirming flight details can vary greatly depending on the airline that the passenger is flying with and the DCS chosen by the airline for use at the particular airport. New airlines coming into the market will also face a barrier to entry through the substantial cost required to develop software applications to run on the CUSS kiosks at different airports, sometimes using different DCSs. This barrier to entry will be hardest-felt by the budget airlines.

The different excess baggage policies for the different airlines can complicate matters further for the CUSS kiosks. Up to now, there has been no facility to determine or charge excess baggage fees without the assistance of the manned check-in desks. The decision whether or not to charge the excess baggage fees is left to the operator at the check-in desk, and often the fees are waived to avoid confrontation with the passenger. Common baggage drop areas serving a variety of different airlines have not been widely used because of the different baggage policies that apply and because of the complications associated with accessing the different reservation and departure control systems. The operator can either log into and out of the different systems individually, toggle between the different systems or use a piece of software that provides an interface for the different systems. However it still relies on the human operator deciding when to charge the excess baggage fees. A system that can operate automatically and calculate the excess baggage fees for a range of different airlines has not yet been developed.

It would be desirable to provide a more unified system, which is not airline specific, to improve the efficiency of processing passengers through to the air-side facilities. By increasing the productivity of the departure hall space, the very significant cost of expanding the size of the departure hall and associated infrastructure is avoided as passenger numbers grow.

Another problem which has generally just been accepted by the airlines, but which has driven the development of the present invention, is that fees are charged for communicating passenger details via the dedicated circuits of the specialist airline networks and servers (for example, the private wide area networks (WAN) such as the SITA and ARINC networks, and leased lines between airline and airport servers), and this is now becoming a significant part of the passenger processing cost. It would therefore be desirable to provide an alternative that could lead to savings and possible reduced fares.

It is known from US-A-2008/010375 to provide a remote site self-service kiosk that is based on a CUSS kiosk. The remote site kiosk is able to offer check-in facilities for multiple airlines through self-service applications running on the kiosk. The remote site kiosk is equipped with encryption support and is able to establish connections through the internet with provider networks, such as airline computer systems having airline production servers and airline reservation host servers, as well as a centralised data centre, through the establishment and provision of tunnelling endpoints and dedicated circuits. Numerous firewalls are provided within the network to protect the circuits and to ensure the dedicated circuits comply with the CUSS standards.

US-A-5150760 describes a check-in counter that also has a scale unit and can be located on a curbside outside an airport terminal. The kiosk connects to the main computer systems of the airport in order to check in passengers as they arrive at the airport.

WO-A-2006/029639 describes a mobile passenger service module on a mobile device such as a mobile phone. It is able to communicate with the departure control systems and reservation systems of multiple airlines in order the assist the passenger with the checking-in procedure for a number of different legs of a trip. This may include inputting the number of bags the passenger wishes to check in. The passenger would then drop his/her baggage at a baggage drop facility in the airport in the normal way.

GB-A-2461949 describes a luggage weighing machine for checking the weight of a passenger's luggage prior to check in. It identifies many of the problems encountered with the collection of excess baggage fees. The weighing machine is operably linked to a database containing information relating to luggage allowances and associated charges. The user pays a fee to use the machine. If the passenger's baggage is too heavy, the machine issues a reactivation key (a code to allow the passenger to reactivate the device without having to repay), allowing the passenger to repack and redistribute the weight in his/her bags until he/she is within their baggage allowance. In cases where the passenger's baggage remains over-weight for the particular policy, the passenger will at least be aware of this before they reach the check-in area and will know how much they are expected to pay. No excess baggage fees are collected by the weighing machine.

According to a first aspect, the present invention provides a check in system for checking in passengers and/or the passenger's baggage for flights, comprising a kiosk in an airport and a remote computer system, wherein the remote computer system provides web based services that are accessed by the kiosk, the remote computer system comprising one or more servers running a suite of software that includes a plurality of application programming interfaces adapted to interface with different airline reservation systems and departure control systems, the kiosk being provided with a weighing device to weigh the passenger's baggage, the kiosk further being able to communicate with the remote computer system using internet based communications in order to process the check in procedure for a passenger that is checking in on a flight and/or is checking baggage in on a flight, wherein the kiosk has been programmed to present an interface to the passenger during the check in procedure which is the same regardless of the airline or the departure control system the airline has chosen, and after the passenger has identified an airline that he/she is travelling with on the kiosk and a reservation code has been entered, the kiosk is arranged to transmit data comprising an identification of the airline and the reservation code through the internet using the internet based communications in the form of encrypted messages to the remote computer system, and further wherein the remote computer system, on receipt of the airline identification and the reservation code, is arranged to:
identify a reservation system for the airline and look up an internet address for a router of the airline's reservation system by selecting the airline's reservation system from a database holding details of a plurality of reservation systems for more than one airline, the selection being based on the identification of the airline inputted by the passenger;
contact the reservation system for the airline, transmit the reservation code to the airline's reservation system and automatically download data corresponding to the passenger's reservation record using encrypted messages that are sent through the internet, wherein the passenger's reservation record on the airline reservation system is the passenger name record (PNR) and the remote computer system is arranged to download the passenger name record corresponding to the reservation code when downloading the passenger's reservation record;
process the passenger's reservation record automatically, including extracting e-ticket and special service request (SSR) information from the passenger's reservation record for the passenger's flight and processing this e-ticket and SSR information during the checking in process, and, using encrypted messages that are sent through the internet, send prompts to the passenger to confirm details through passenger input at the kiosk, and to prompt the passenger to weigh each of his/her bags, the kiosk being arranged to generate a recorded weight for each item of baggage;
identify a departure control system for an airline and flight, and look up an internet address for a router of the departure control system by selecting a departure control system from a database holding details of a plurality of departure control systems that are used by more than one airline and for more than one airport;
contact the departure control system using encrypted messages that are sent through the internet; and
automatically modify the passenger's reservation record on the airline's reservation system and a record of the passenger stored on the departure control system so as to check in the passenger and/or the passenger's baggage on the flight,
wherein the remote computer system is provided with a library of algorithms defining a plurality of airline baggage policies for different airlines, and the remote computer system is arranged to determine, on the basis of recorded weights transmitted by the kiosk and the e-ticket and SSR information extracted from the passenger's reservation record, whether or not the passenger is within his/her baggage allowance by looking up the algorithm defining the baggage allowance for the airline and ticket type that the passenger is travelling on in the library of algorithms by having regard to the extracted e-ticket and SSR information, applying the recorded weight(s) for each item of baggage to the algorithm, and if outside the baggage allowance, determining the additional baggage allowance required to accommodate the recorded weight(s) of each item of baggage and determining a fee for the additional baggage allowance required, wherein if the remote computer system determines that the passenger has exceeded his/her baggage allowance, the passenger is prompted to pay the fee, and if accepted, then the fee is transmitted to a payment device on the kiosk to process a transaction for the fee for the additional baggage allowance.

Viewed from a second aspect, the present invention can be seen to provide a remote computer system for use in the check in system described above, comprising one or more servers running a suite of software that provides web based services for access by a kiosk in an airport using communications in the form of encrypted messages that are sent through the internet, wherein the suite of software is arranged to:
on receiving an identification of an airline and a reservation code through the internet from the kiosk, identify a reservation system for the airline and look up an internet address for a router of the airline's reservation system by selecting the airline's reservation system from a database holding details of a plurality of reservation systems for more than one airline, the selection being based on the identification of the airline inputted by the passenger;
contact the airline's reservation system, transmit the reservation code to the airline's reservation system and automatically download data corresponding to a passenger's reservation record, wherein the passenger's reservation record on the airline reservation system is the passenger name record (PNR) and the remote computer system is arranged to download the passenger name record corresponding to the reservation code when downloading the passenger's reservation record;
process the passenger's reservation record automatically including extracting e-ticket and special service request (SSR) information from the passenger's reservation record for the passenger's flight and processing this e-ticket and SSR information during the checking in process, and, using encrypted messages that are sent through the internet, send prompts to the passenger to confirm details through passenger input at the kiosk and to prompt the passenger to weigh each of his/her bags for the kiosk to generate a recorded weight for each item of baggage, the passenger being presented with an interface during the check in procedure which is the same regardless of the airline or the departure control system the airline has chosen;
identify automatically a departure control system for the airline and flight, and look up an internet address for a router of the departure control system by selecting a departure control system from a database holding details of a plurality of departure control systems that are used by more than one airline and for more than one airport;
contact automatically the departure control system using encrypted messages that are sent through the internet; and
modify automatically the passenger's reservation record on the airline's reservation system and a record of the passenger on the departure control system so as to check in the passenger and the passenger's baggage on the flight,
wherein the remote computer system is provided with a library of algorithms defining a plurality of airline baggage policies for different airlines, and the remote computer system is arranged to determine, on the basis of recorded weights transmitted by the kiosk and the e-ticket and SSR information extracted from the passenger's reservation record, whether or not the passenger is within his/her baggage allowance by looking up the algorithm defining the baggage allowance for the airline and ticket type that the passenger is travelling on in the library of algorithms by having regard to the extracted e-ticket and SSR information, applying the recorded weight(s) for each item of baggage to the algorithm, and if outside the baggage allowance, determining the additional baggage allowance required to accommodate the recorded weight(s) of each item of baggage and determining a fee for the additional baggage allowance required, wherein if the remote computer system determines that the passenger has exceeded his/her baggage allowance, the passenger is prompted to pay the fee, and if accepted, then the fee is transmitted to a payment device on the kiosk to process a transaction for the fee for the additional baggage allowance.

Viewed from a third aspect, the present invention can be seen to provide a computer program product comprising a suite of software for a remote computer system that, when run on the remote computer system, provides web based services for a passenger checking in for a flight or checking in baggage for the flight using a kiosk in an airport, the kiosk being provided with a weighing device to weigh the passenger's baggage, the kiosk further being able to communicate with the remote computer system using internet based communications in the form of encrypted messages to process the check in procedure for a passenger that is checking in on a flight and/or is checking baggage in on a flight, wherein the computer program product is arranged to control the operation of the remote computer system in order to:
on receipt of an identification of an airline and a reservation code through the internet from the kiosk, identify a reservation system for the airline and look up an internet address for a router of the airline's reservation system by selecting the airline's reservation system from a database holding details of a plurality of reservation systems for more than one airline, the selection being based on the identification of the airline inputted by the passenger;
contact the airline's reservation system, transmit the reservation code to the airline's reservation system and automatically download data corresponding to a passenger's reservation record using encrypted messages that are sent through the internet, wherein the passenger's reservation record on the airline reservation system is the passenger name record (PNR) and the remote computer system is arranged to download the passenger name record corresponding to the reservation code when downloading the passenger's reservation record;
process the passenger's reservation record automatically including extracting e-ticket and special service request (SSR) information from the passenger's reservation record for the passenger's flight and processing this e-ticket and SSR information during the checking in process, and, using encrypted messages that are sent through the internet, send prompts to the passenger to confirm details through passenger input at the kiosk and to prompt the passenger to weigh each of his/her bags for the kiosk to generate a recorded weight for each item of baggage, the passenger being presented with an interface during the check in procedure which is the same regardless of the airline or the departure control system the airline has chosen;
identify automatically a departure control system for the airline and flight and look up an internet address for a router of the departure control system by selecting a departure control system from a database holding details of a plurality of departure control systems that are used by more than one airline and for more than one airport;
contact automatically the departure control system using encrypted messages that are sent through the internet; and
modify automatically the passenger's reservation record on the airline's reservation system and a record of the passenger on a departure control system so as to check in the passenger and/or the passenger's baggage on the flight,
wherein the computer program product includes a library of algorithms defining a plurality of airline baggage policies for different airlines, and the remote computer system is arranged to determine, on the basis of recorded weights transmitted by the kiosk and the e-ticket and SSR information extracted from the passenger's reservation record, whether or not the passenger is within his/her baggage allowance by looking up the algorithm defining the baggage allowance for the airline and ticket type that the passenger is travelling on in the library of algorithms by having regard to the extracted e-ticket and SSR information, applying the recorded weight(s) for each item of baggage to the algorithm, and if outside the baggage allowance, determining the additional baggage allowance required to accommodate the recorded weight(s) of each item of baggage and determining a fee for the additional baggage allowance required, wherein if the remote computer system determines that the passenger has exceeded his/her baggage allowance, the passenger is prompted to pay the fee, and if accepted, then the fee is transmitted to a payment device on the kiosk to process a transaction for the fee for the additional baggage allowance.

In response to prompts displayed on the screen, the kiosk receives inputs from the passenger and preferably transmits these as responses to a remote computer system through actions controlled by a processor provided in the kiosk. The processor may be part of a computer arranged to control the operations of the kiosk. The kiosk is arranged to communicate the passenger responses and transmit data with the remote computer system using encrypted messages that are sent through the internet; data is not sent using the existing private wide area networks such as the SITA or ARINC network, nor is it sent through the dedicated circuits connecting the airport based servers to the DCSs chosen by the airline, for example, the permanently open data lines that are leased by the airlines. Thus the kiosk may include, or at least be coupled with, a communication device that can access the internet, and via such internet based communications, where packets of data are routed through the internet, access the remote computer system. Excess baggage fees, or other fees, may be determined, e.g., on the remote computer system, and where these are payable, the passenger can pay these fees using the passenger payment device on the kiosk. The remote computer system can also perform all the actions required to check in the passenger and his/her baggage.

Preferably, the kiosk comprises a housing having a screen to display information to a passenger, a reader to read a passenger identification medium, a payment device to make payments and a printer to print a receipt and/or baggage tags. The kiosk may further include or be connected with a weighing device to weigh items of baggage and an archive device to store a recorded weight of the baggage that has been weighed. Up until now, self-service kiosks have not included a weighing device, so it has not been possible to check the weight of passenger's bags for the checking in process other than by the passenger queuing up for a manned check in desk.

The remote computer system obtains a copy of the passenger's reservation from the airline's reservation system, again using communications that are sent through the internet, processes the ticket information for the relevant flight reservation and modifies a record for the passenger on a departure control system, in order to check-in the passenger and/or the passenger's baggage. In doing so, the kiosk can also charge any excess baggage fees that might be due. There are several benefits of doing this.

The first is that the installation procedure for the kiosk and associated costs are minimal. The self-service kiosks are free-standing, and they require only a simple data connection to the internet, for example, an ADSL connection or similar, and a connection to a power supply. In one embodiment, the connection to the internet may be via a data connection cable plugged into the kiosk and leading to a router.

By doing this, the cost of maintaining dedicated circuits to the DCSs is avoided. In contrast to the dedicated circuits where a permanent connection is leased or maintained between a first device and a second device (e.g., a first modem connected to a second modem), the present invention the communications are sent through the internet. The communications may be in the form of packets of data that are sent from a first router (e.g., a router associated with the kiosk) to a destination router (e.g., the router of the remote computer system) using a plurality of internet based routers, as the packets of data pass through the internet. Each router along the way will decide the best available route for the packet in accordance with the usual internet protocols. Different packets of data associated with a particular communication may travel a different route to the destination router (i.e., pass through a different set of routers), depending on the internet traffic. By comparison, the packets of data in a dedicated circuit will only travel along one route between the two devices; the communications are not routed as such because there is only one path to take. While the dedicated circuit is secure, so there is no requirement to add the complexity of encryption, the cost of leasing and maintaining these dedicated circuits is now becoming a significant cost to the airlines, which is passed on to passengers by way of higher ticketing costs.

As there is no physical connection to the existing IT networks, it avoids the complications that this might provoke, not only in terms of the policy decisions that have to be taken, but also in terms of the installation of the hardware and subsequent incompatibilities between the data processing systems. More importantly, from a commercial perspective, the fees for transmitting data via these existing networks and servers, can be avoided. There is also no cost implication of leasing special data communication lines within or from the airport because the messages are sent via the internet. The location of the kiosks is also more flexible, and if it is found that the location of a kiosk is not working, for example, because it is becoming over or underused, then the location of the kiosk can be altered easily to improve the efficiency by which the passengers are processed. Changing the location of the kiosk can even be in response to temporary changes, such as temporary maintenance work to some other part of the departure lounge which affects the use of the kiosk.

The remote computer system is preferably able to check in passengers that are operating a plurality of kiosks simultaneously. The self-service kiosks may be located at different airports, and the different airports may even be run by different operators. Indeed the plurality of self-service kiosks accessing the remote computer system may be located in different countries.

The self-service kiosks may be installed with operating software that, prompted by commands from the remote computer system, presents the passenger with a series of questions and automatically transmits the responses from those questions back to the remote computer system. The software preferably presents the information in a non-branded way that is not airline dependent. In this way, the passenger will become familiar with the same questions and format each time they fly, and so will feel more comfortable using the machines. This also has benefits in terms of staff training as only one check in procedure needs to be known for a plurality of airlines at a plurality of airports; the interface with the remote computer system is the same regardless of which airline is selected on the self-service kiosk or which DCS the airline has chosen. Preferably the majority of the questions are of a form that only a "yes" or "no" reply is appropriate and offered as a choice for the passenger to accept. It has been found that this significantly improves the passenger response times. The passenger also has less potential to feel anxious by thinking, after the event, that they should have selected a different reply to a particular question.

From a technical point of view, it has been found that average check-in times are faster than using the CUSS kiosks. As the interface that the passenger sees is the same regardless of the airline or DCS, once the passenger is familiar with the operation, check in times can become faster.

Preferably the communication with the passenger is via a screen, though alternatives may be offered, such as audible communicating devices. The "yes"/"no" replies could be made by pushing physical buttons, by activating virtual buttons using a touch screen, by making audible responses into a microphone, or by any other manner of communicating responses in a binary form.

As mentioned already, the check in system, and in particular the remote computer system, preferably also processes the passenger's reservation to check in the passenger for the flight.

Passenger name records (PNRs) are the complete reservation records for the passengers, and may contain information, for example, e-ticket information, relating to one or more legs of a trip. For most trips, there is usually an outward and a return journey, where each journey may comprise one or more flights. The PNR would also usually contain the payment details for the trip and list any other passengers if travelling in a group. If provided, it may also include frequent flyer information or other promotional information. The PNR also includes, special service requirements (SSRs), for example, advising that the passenger needs assistance to the plane, whether they have or plan to check-in any bags, meal requirements, etc. In order to perform the checking in operation, the remote computer system is arranged to contact the airline's reservation system, issue a command requesting a copy of the PNR for the passenger from the airline's reservation system, download a copy of the PNR and extract the e-ticket information. Additional information is also extracted, such as the SSR codes.

One problem identified by the present invention is that the DCS does not hold sufficient information in its passenger records to determine the excess baggage policy that might apply to a passenger and there are marked differences between the way that different airlines and DCSs will hold this information. Consequently the existing CUSS kiosks cannot take account of the various excess baggage policies imposed by the various airlines.

In the present invention, the additional information contained in the PNR, such as the e-ticket and SSR information, is used by the check in system, in particular the remote computer system, to determine the baggage allowance for the passenger. By weighing the passenger's baggage on the weighing device of the kiosk, the remote computer system can determine whether the passenger is within his/her baggage allowance. If the passenger is outside his/her baggage allowance, then an additional baggage allowance can be identified and offered to the passenger for a fee.

As used herein, the process of "checking in", is the process of checking the identity of a passenger against a reservation and converting the reservation (where there may be more reservations than available seats) into an actual allocation of a seat on a flight (making the seat unavailable for another passenger). A boarding pass is generated. This may be a printed paper boarding pass or an electronic boarding pass. Baggage tags may also be printed to check in the baggage on the flight.

Where on-line check in has already been selected by the passenger, then the passenger may be already "checked in" and have a boarding pass (e.g., printed by the passenger or sent to the passenger's phone), and may only need to check in baggage. During this process, the identity of the passenger would be checked, details of the baggage would be taken and baggage tags would be printed. The baggage tags contain special identification numbers to track the baggage.

Web check in systems are known, for example, where a passenger accesses the airline's own reservation system several hours before a flight, and through the airline's interface, modifies his/her reservation to check in. In this aspect of the present invention, however, the remote computer system is acting as a common interface for a plurality of airlines and therefore a difference here is that the PNR is downloaded, i.e., transmitted outside of the airline's reservation system, during the web-based check in process.

The remote computer system is a suite of software programs offering web based services. The software may be run on one or more web based servers, e.g., a virtual server or farm of servers. The remote computer system may be seen to act as an interface between the airline reservation systems and the DCSs being used by the airlines, forwarding messages from one server to the next via the internet, in order to complete the check-in procedure. Regardless of its form, the purpose of the remote computer system is to process the reservation record for the passenger(s), which is in the form of a PNR downloaded from the airline's reservation system, using communications that are sent through the internet, so that the processing can take place at a remote location away from the particular airport that the passenger is flying from without incurring any unnecessary fees for the transmission of the data. As part of the checking in procedure, the passenger may have any baggage weighed at the kiosk. The e-ticket and SSR information of the PNR is checked, and using a library of algorithms relating to excess baggage policies for the airline, the remote computer system determines whether the passenger is within his/her baggage allowance for the ticket they are travelling on. If outside, then the remote computer system determines the additional baggage allowance required and the fee that is payable. The remote computer system, using the passenger payment device, can then take a payment for the fee. As a final part of the checking in process, the passenger record on the DCS is updated, by using communications that are sent through the internet to gain access to the DCS record, rather than using the IATA messaging networks or expensive leased lines within or from the airport. A seat on the flight is allocated to the passenger, though this may be any seat on the plane or within a particular cabin class rather than a specific seat with a seat number. A seat map for the plane may be updated and one or more seats changed in status to "unavailable". A tally on the DCS of allocated seats is increased by one (or more where a group of passengers is being checked in). The remote computer system may also use the e-ticket coupon to update a record on a ticketing database. Baggage tags may be printed, which can be 'active' or 'inactive'. A boarding pass may be generated (e.g., printed). The remote computer system could also provide its own DCS for the airport.

The process of identifying a reservation system for an airline or a departure control system for an airline and a flight involves selecting the particular airline reservation system or departure control system from a list of such systems. Thus a difference over the known check in systems is that the remote computer system has to work out which reservation system or departure control system to contact for a particular passenger because it is acting as a common interface for a plurality of airlines and airports. Also, because the remote computer system is not communicating with these systems using dedicated circuits that are already open, the remote computer system needs to identify a way in to these systems. The remote computer system identifies an internet address (e.g., an internet protocol address or uniform resource locator) for the router of the airline's reservation system or departure control system that the remote computer system has identified it needs to access. The remote computer system then contacts and communicates with the identified
airline reservation system or departure control system. It does so using communications that are routed through the internet using conventional internet protocols of best available route as the packets of data are passed from router to router as the message makes its way through the internet from the router of the remote computer system to the router of the identified airline's reservation system or departure control system. In this way, the need for the expensive dedicated circuits can be avoided.

As part of the process of checking in a passenger's baggage (whether or not the passenger has already checked in previously online), the remote computer system also identifies the baggage allowance for the passenger. Each airline has its own policy on baggage allowance and rules for determining when excess baggage fees are due. These will also vary from time to time when fee structures are revised or promotions are offered, for example, two for one deals. Details of the promotions or the allowance may be evident in one or more of the SSRs of the PNR, for example, as a code, so that the promotion or allowance is honoured when the passenger comes to check in. Other policy requirements may only be evident from the airline's terms and conditions. This information can be resourced by the provider of the remote computer system, or more preferably, it is provided by the airlines. For example the airlines could each be invited to update a record on a library of baggage policies. This library of baggage policy information together with the SSRs of the PNRs and other ticket information, is then accessed to determine whether a passenger is within his or her, or the group's baggage allowance.

The baggage allowance may limit the total number of bags allowed, the number of bags that incur a fee, the maximum weight per bag, the maximum baggage weight that the passenger is allowed, and the cost of any excess baggage weight. For some airlines, it is possible to have special arrangements where for a fee, the passenger may be allowed to carry a certain number of bags or weight of baggage without incurring fees or with only incurring a reduced fee. Some airlines, from time to time may give offers, such as a 2 for 1 offer, or similar. The baggage allowance may be presented as a relatively simple formula or as a more complex algorithm. Thus, the remote computer system is provided with a library of algorithms detailing baggage allowances for a plurality of airlines and across a range of ticket types. The library may take the form of a database containing a plurality of algorithms relating to the baggage allowances.

The passenger is prompted to weigh his/her items of baggage, for example, by prompting the passenger to load each bag onto the weighing device individually and in turn until each item of baggage for the passenger (or group of passengers) has been weighed and a recorded weight for each item of baggage has been collected. Each recorded weight would also be written to an archive of the kiosk. The bags would typically be items of baggage that are being checked-in, i.e., the baggage which would be stored in the hold of the aircraft during the flight. However, market conditions may also require the passenger to weigh any hand luggage too that they are taking with them into the cabin of the plane.

Each recorded weight for each item of baggage, is transmitted from the self-service kiosk to the remote computer system using communications that are sent through the internet. The e-ticket and SSR information from the PNR may be used to identify the algorithm that applies from the library of baggage allowance. A calculation is performed on the remote computer system using the selected algorithm and the recorded weight(s) to determine whether the passenger is within or outside his/her baggage allowance. A new baggage allowance may be selected by the remote computer system and offered to the passenger for a fee.

The PNR is also preferably checked by the remote computer system to make sure that all the details are correct and complete. The ticketing information may be checked to ensure the coupon is valid for the passenger and/or the flight. If the passport number and expiry date are missing from the PNR, then the passenger may be prompted to scan his/her passport using the reader or otherwise input the details normally. A fee might be charged to cover the costs of updating this information. The passenger payment device can be used for the transaction, using the internet based communications of the kiosk. Thus the kiosk and/or remote computer system may be arranged to perform a set of checks on the passenger's booking as part of the checking in process. This has the advantage that any problems in the booking can be identified at an early stage before the passenger's bags have been dropped off.

If the passenger is within his/her baggage allowance, and no excess baggage fees or other fees are payable, then the self-service kiosk may move on to the process of printing baggage tags and offering the passenger other flight options, such as aisle or window seat preference, seat location, meal type, special requirements, and so forth. The information contained in the PNR may be used to influence the questions put to the passenger. The passenger record on the DCS is then updated with a code to signify that all boarding fees (including excess baggage fees) have been paid and that the passenger is "checked in". Modifications may also be made to the passenger record to specify the chosen flight options. The relevant passenger record is also modified on the airline's reservation system. The modifications are made using communications that are sent through the internet. The passenger is then free to attach the baggage tags (which may be active or not active) and drop the baggage at a common baggage drop before proceeding to security and the air-side facilities of the airport.

If, on the other hand, it is determined that the passenger is outside his/her baggage allowance, or indeed that other fees are payable to complete the check-in procedure, a command is then sent from the remote computer system to the self-service kiosk prompting the passenger with an opportunity to pay excess baggage fees based on the number and/or weight of one or more of the items of baggage, or to pay the other fees that might be due. A payment may be made on a credit or debit card using a card reader device provided in the self-service kiosk. The payment device may also accept cash and provide change. The system should be able to handle all card payment transactions in a manner that is compliant with the Payment Card Industry Data Security Standard (PCI DSS), and may, for example, incorporate a "chip and pin" security system. Thus, the kiosk will transmit data to, and interact with, other servers operated by other parties, such as banks, credit lenders, etc., using internet based communications, in order to process the payment.

Once the necessary payment has been made and an authorisation code has been received, baggage tags may then be printed off and attached to the baggage so that it can be deposited at a common baggage drop. The baggage drop may include a further weighing device to confirm the recorded weights. In addition, the passenger may be offered other flight options, such as seat and meal preferences, etc, as mentioned above, or may be offered other services from partners of the airline or the provider of the remote computer system, like hotel accommodation or car rental.

An initial question on the self-service kiosk may prompt the passenger to identify which airline he/she is travelling with. The passenger may then be prompted to identify himself/herself by entering a reservation code. This is a six digit alphanumeric code (can be a seven digit alpha numeric code in the case of Easyjet), in effect a PIN number for the PNR on the reservation system that is used to locate the record. Once the remote computer system has received an identification of the airline and the reservation code from the kiosk using communications that are sent through the internet (e.g., encrypted messages that are routed through the internet), the remote computer system can look up and select, on a library of internet addresses (e.g., IP addresses, URLs) an address for the airline's reservation system (e.g. the IP address of the reservation system's router), and call up some or all of the passenger's reservation record (the PNR) from the airline's reservation system using the reservation code. From the PNR, the remote computer system can determine whether the passenger is travelling alone or in a group.

If the passenger is travelling in a group, the passenger may be prompted to confirm whether he/she is also checking in all the other members of that group, or they may choose to check in individually.

Such a system provides advantages in terms of operational costs whether or not a passenger is checking in baggage as part of the check in procedure, for example, if the passenger has hand luggage only. If baggage is being checked in, then this functionality can provide the advantages mentioned previously.

It is possible that the passenger may not be able to locate his/her reservation code, and therefore the passenger may need to identify his/her reservation record using his/her name instead. This could be entered manually through the passenger typing in his/her name on the screen of the kiosk (usually just the last name) or it could be obtained from reading a passenger identification medium, such as a passport, identity card or document, driver's licence or other such document via a reader on the kiosk. If the passenger has already checked in online and has been issued with a boarding pass, then the passenger identification medium could be a boarding pass. Preferably the passenger's passport is offered up to the reader, an image of a portion of the passport is taken, the image analysed and the passenger's name extracted from the information. The kiosk would send the passenger's name and indication of the airline to the remote computer system using the internet based communications, and the remote computer system would then transmit the passenger's name to the airline's reservation system, rather than the reservation code, to obtain the passenger's reservation record. Similarly it may be possible to extract the passenger's name from reading a credit card or other payment card. As a result, in accordance with other preferred embodiments of this aspect of the present invention, the references in this aspect to "reservation code" can be used interchangeably with "passenger identification". In the case where a boarding pass is scanned, the reservation code may be identified from an image of the bar code. Thus the kiosk may transmit data comprising the reservation code to the remote computer system in an encrypted form as an image of the bar code.

The new system, in which a plurality of such self-service kiosks are located in an airport departure lounge, each kiosk being connected to a remote computer system that operates using communications that are sent through the internet in the way described, has been found to offer dramatic efficiencies to the through-put of passengers in the departure lounge. For example, it is believed that the system can potentially double the capacity of a departure lounge in terms of the number of passengers (and their baggage) that can be processed in a given size of departure hall in a set time.

The new self-service kiosks are generally located within an airport terminal building with the connection to the internet also being within the airport terminal building, but the kiosks could also be located in other areas of the airport infrastructure to further improve on the flow of passengers through the airport, for example, in car parks or hotel foyers close to the airport departure area. They could even be located at railway stations adjacent to or linking to the airport's railway station. Non-airline specific assistance can be on hand to assist passengers where necessary. In general it is found that the passenger's opinion of the airline is less harmed by the 'common use' nature of the kiosks, even though the passenger may be asked to pay fees for excess baggage. More control is provided back to the airport operators. They can choose the positioning of the new kiosks to optimise throughput of passengers. Previously the throughput of a departure lounge was controlled by how efficiently airline operators ran their own individual check-in facilities, and the position of these could not be changed easily because it is governed by leases and previously agreed contract terms.

The processing used for the check in process can be used similarly to provide a new improved baggage drop area in an airport that is common to a plurality of airlines.

Certain preferred embodiments of the present invention will now be described in greater detail, by way of example only, and with reference to the accompanying drawings in which:
Figure 1 illustrates a convention departure hall from above;
Figure 2 illustrates an example of a departure hall from above incorporating preferred kiosks of the present invention;
Figures 3a-3d show elevations of a preferred self-service check in kiosk for use in the present invention;
Figure 4 illustrates a possible communications network for the kiosk illustrated in Figures 3a to 3d;
Figure 5 illustrates an example of network connections for the conventional departure hall shown in Figure 1;
Figure 6 shows an example of the modified network connections for the departure hall shown in Figure 2;
Figure 7 illustrates a preferred check in system in accordance with the present invention;
Figure 8 is an example flowchart showing the steps of a preferred check in process;
Figure 9 illustrates how the data for the passenger records is collected for a conventional departure control system and for the preferred check in system of the present invention;
Figure 10 illustrates time lines showing an example of the transfer of data to a departure control system and the preferred remote computer system of the present invention;
Figure 11 illustrates the transfer of data to a conventional departure control system;
Figure 12 shows a preferred embodiment of the check in system of the present invention;
Figure 13 shows the preferred structure of the remote computer system in more detail;
Figure 14 illustrates an example of a departure hall from above incorporating the preferred baggage drop kiosks of the present invention;
Figures 15a and 15b show elevations of a preferred baggage drop kiosk for use in the present invention;
Figure 16 illustrates a possible communications network for the kiosk illustrated in Figures 15a to 15b;
Figure 17 shows an example of the network connections for the departure hall shown in Figure 14;
Figure 18 illustrates a preferred baggage drop system in accordance with the present invention;
Figure 19 shows a preferred embodiment of the baggage drop system of the present invention; and
Figure 20 shows the preferred structure of the remote computer system in more detail.

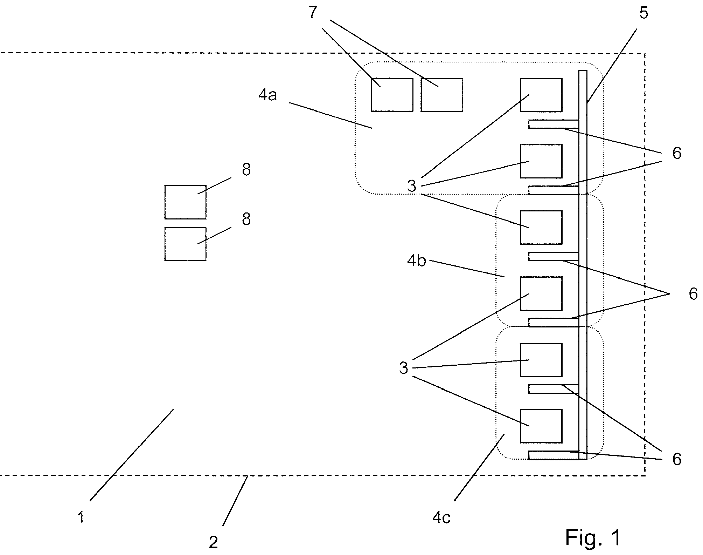

In Figure 1 there is shown a schematic plan view for a departure hall 1 in a terminal building 2 of a conventional airport. Typically, along one side of the departure hall 1, there will be a line of manned check-in desks 3. In some departure halls 1, these check-in desks 3 may be arranged in specific zones 4a, 4b, 4c, corresponding to different airlines and branded accordingly. In other departure halls 1, the check-in desks 3 may all look the same and the different airlines distinguished only by images presented on screens above the check-in desks 3.

Each check-in desk 3 is provided with common use terminal equipment (CUTE) e.g., in the form of a monitor and a keyboard, so that the operator may access the passenger records. Behind the check-in desk 3, one or more conveyors 5 may be provided to transport the baggage to the ground handler. A short conveyor belt 6 is usually provided to the side of each check-in desk 3 for the passenger to load his/her bags on to. This deposits the bags on to the conveyor 5 once the bags have been checked in. The short conveyor belt 6 usually incorporates a weighing device (not shown) located under the surface of the belt 6, to weigh the items of baggage for determining whether the passenger is within his/her weight allowance.

More recently, self-service check-in kiosks 7 have been provided in more central areas of the departure hall 1. In many instances these will be airline specific kiosks 7 which are connected with a particular airline, and often these will be located within an airline branded zone 4a of the departure hall 1. Passengers can use the airline specific self-service kiosks 7 to check in for their flight or to modify their booking. Staff employed by the airline may be on hand to help the passenger where necessary.

It is also known to provide common use self-service (CUSS) kiosks 8, which are usually located within the common areas of the departure hall 1. CUSS kiosks 8 allow check-in facilities for a range of different airlines. The passenger is presented with a screen showing the logos of the different airlines. The passenger selects the airline he or she is travelling with by touching the area of the screen with the particular airline's logo. This activates the airline's software for performing the check-in process.

As each airline is required to develop its own software for the CUSS kiosk 8, the operation of checking in for a flight can vary considerably from one airline to another. This may be not only in terms of the questions asked to the passenger, but also the way the information is presented and even the layout of the virtual buttons that the passenger must press. This has been found to confuse and frustrate the passenger who is trying to check in for his or her flight. Moreover, passengers are likely to be flying with different airlines each time they fly, and this means that they will have a different experience of the CUSS kiosk 8 and the check-in process each time they fly. An airline may also use different DCSs at different airports, and this too can effect the presentation of the information. As a result, the passenger takes longer over the check-in process than if he/she was more familiar with the operation of the kiosk 8. The CUSS kiosks 8 were intended to provide a solution to the manned check-in desks 3, but in reality it has been found that they do not check in passengers as efficiently as they could. A technical effect is that the operational efficiency of the departure lounge can improve because the new kiosks present a common interface that passengers and assisting staff can become familiar with easily, and hence the passenger can check in themselves or any baggage much quicker than by using CUSS kiosks.

There are some additional problems with the CUSS kiosks 8 that affects the operational efficiency of the departure hall 1. Firstly, each airline must develop its own software to run on the CUSS kiosk 8 and the development costs of this can represent a barrier to entry, particularly for the budget airlines. This may mean that the airline cannot afford to make use of the CUSS kiosk 8 facilities, forcing the passengers to have to queue up for assistance at a manned check-in desk 3. Some of the software packages that run on the CUSS kiosks 8 can be slow to load when the passenger "clicks" on the airline's logo on the screen. A more serious problem is that if the airline's software crashes for whatever reason, this may freeze the operation of the CUSS kiosk 8, taking away this CUSS facility for other passengers until the kiosk can be restarted or the software fixed. Even noticing that there is a problem with the CUSS kiosk 8 may take some time as there may be no-one watching over the operation of the screens.

An additional problem with the CUSS kiosks 8 and the airline specific self-service kiosks 7, is that there are no facilities for dealing with the excess baggage policies of the airlines. As a result, any passenger with baggage that needs to be checked in may still have to queue up at the manned check in desks 3, rather than taking advantage of the self-service facilities.

Further delays to the throughput of passengers may also occur as a result of how the airline accepts a payment for the excess baggage fees. In some instances, passengers may be forced to go to another desk to make a payment because there are no facilities at the manned check in desks 3 to process a credit or debit card. Further fees are becoming more popular in the ticketing structure, particularly for the budget airlines, and yet facilities for processing these may be unavailable at the main service points. These delays reduce the throughput efficiency of the departure hall.

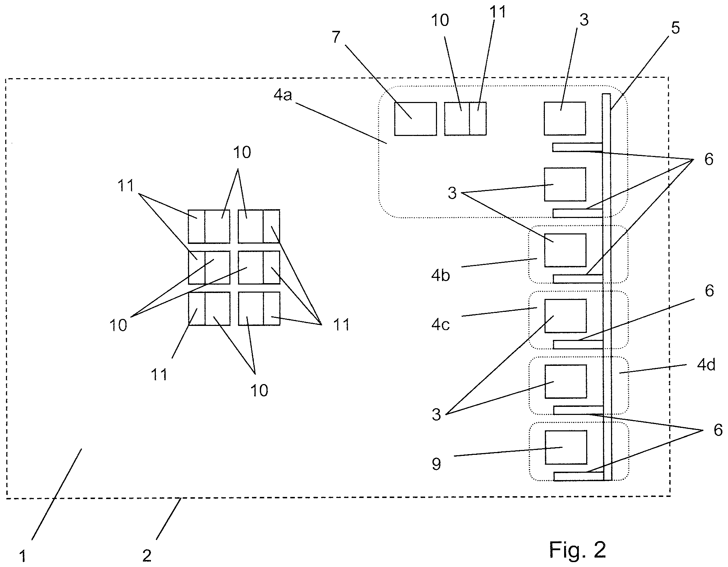

Figure 2 is a schematic representation of how the conventional departure hall 1 shown in Figure 1, can be modified through the incorporation of the self-service kiosks 10 of the present invention. As before, a line of manned check-in desks 3 is provided along one side of the departure hall 1. These may be provided in airline specific zones 4a, 4b, 4c, or as a generic zone 4d. The zones may be fitted with corporate branding or may only be identified through illuminated screens above the manned check-in desks 3. One of the check-in desks 3 may provide a rapid bag drop 9 that is used by a group of airlines.

Through the use of the new self-service kiosks 10, as will be discussed below, it is possible to process passengers through the check-in operation more efficiently, thereby increasing the potential capacity of a departure hall 1 and the number of airlines that are able to operate from a set number of manned check-in desks 3; airlines should require fewer manned check in desks 3.

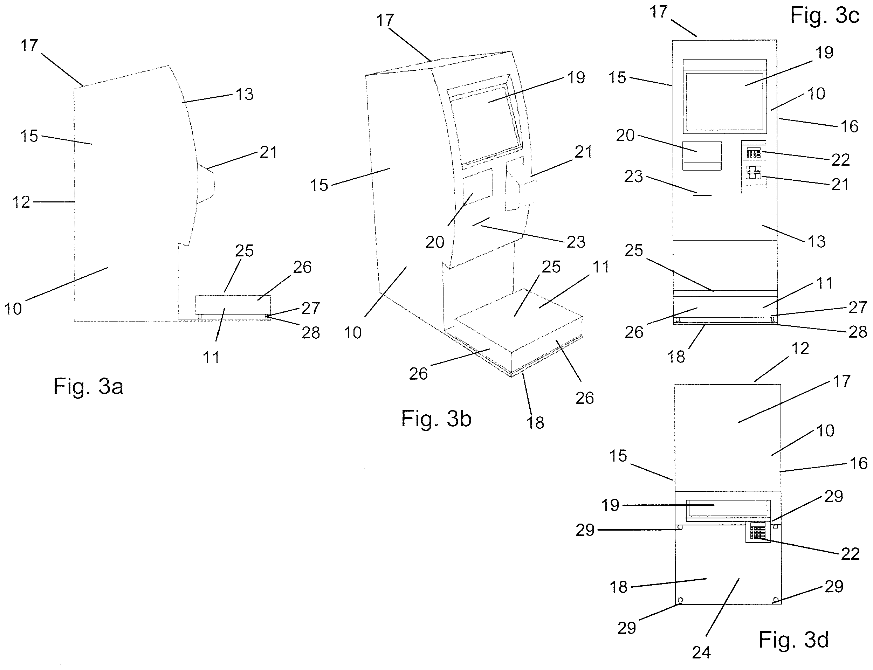

An embodiment of the self-service kiosk 10 of the present invention is illustrated in Figures 3a to 3d. Figure 3a is a side elevation of the self-service kiosk 10, Figure 3b is a perspective view and Figure 3c is a front elevation. As shown in Figures 3a to 3c, the self-service kiosk 10 preferably includes a weighing device 11 located at the front of the kiosk 10. The weighing device 11 is integrated into the appearance of the kiosk. Figure 3d is a plan view of the kiosk 10 with the weighing device 11 removed.

The self-service kiosk 10 comprises a housing 12 having front 13, rear 14 and side 15, 16 surfaces, as well as a roof 17 and a base 18. On the front surface 13, the kiosk 10 includes a screen 19 for communicating information with the passenger. Preferably it is a touch-screen where the passenger can press virtual buttons by touching specific regions of the screen 19. The front surface 13 also includes a reader 20 for reading passenger identification mediums such as passports or other identification documents. It also includes a card reader 21 for processing charges on credit or debit cards. This may include a key pad 22 for entering PIN numbers or the passenger may be able to enter these details using buttons on the screen 19. The card reader 21 may protrude as shown or may be recessed within the housing 12. A printer 23 is also provided on the front surface 13 for printing baggage tags for the passenger's baggage. This or an alternative printer may be provided for printing boarding passes. The screen 19, reader 20, card reader 21 and printer 23 can be entirely conventional components that are mounted into the housing 12.

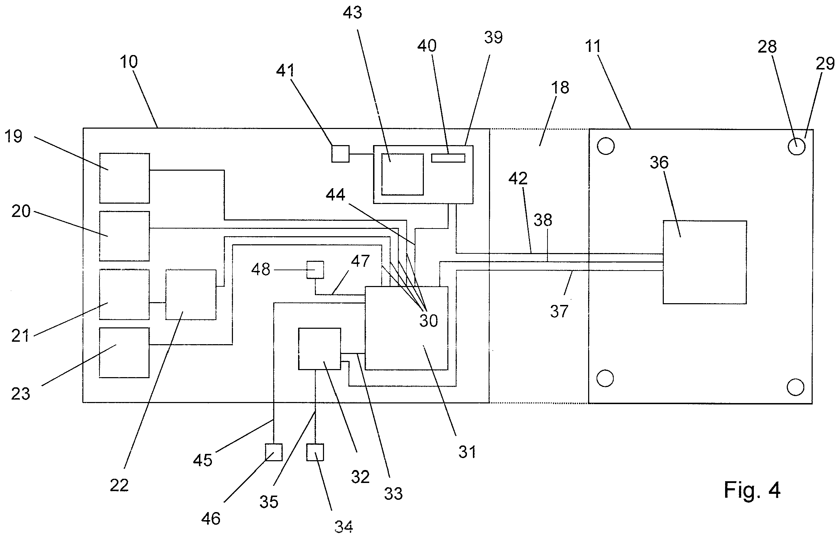

Within the housing 12, a computer is provided (31 in Fig. 4) having a processor arranged to control the operation of the screen 19, reader 20, card-reader 21 and printer 23. The computer 31 may be optimised for easy replacement of the hard drive or power supply in the event of a technical problem. Access is preferably gained to the components within the housing 12 through the front surface 13 being pivotable about a hinge provided at the roof 17 of the housing 12. When the front surface 13 is opened, the centre of gravity of the kiosk 10 moves forward but still remains within the footprint of the extended base 18, which ensures the kiosk 10 remains stable and does not fall over (and potentially causing injury). The base 18 may be a plate of a sturdy metal, such as steel, and it may extend beyond the front surface 13 of the kiosk 10 a distance as much again as the width of the side surface 15, as shown in Figure 3a.

In accordance with the present invention, the self-service kiosk 10 includes a weighing device 11, and preferably this is mounted at the front of the kiosk 10 on the upper surface 24 of the extended base 18. As shown in Figure 3b, the weighing device 11 may have a rectangular weighing surface 25 and rectangular side panels 26 for enclosing the weighing mechanism, i.e., the load cell (36 in Figure 4), although other shapes of weighing device 11 would also be possible. The important consideration is that the weighing device 11 is made tamper-proof, in order to gain trade acceptance. In the arrangement shown, the weighing device 11 is supported on a plurality of legs 27 (in this case four, one under each corner of the rectangular weighing surface 25) with each having an adjustable foot 28, that is located within a cylindrical hole 29 provided in the base plate 18.

In addition to being sufficiently robust to withstand heavy baggage or people climbing on the weighing device 11, it must also be accurate. Preferably the weighing device is able to measure to a first decimal place (i.e., to the nearest 100g), but more preferably it is accurate to two decimal places (i.e., it can measure to the nearest 10g). The indicator 39 can be checked periodically, in accordance with standard weights and measures procedures, to ensure that the weighing device 11 is recording weights accurately. The weighing device 11 also needs to be secured to the kiosk 10 in such a way that its removal is prevented, without affecting the weight measurements. The weighing device 11 also needs to be capable of measuring the weight of a bag accurately even when the bag is not placed exactly in the centre of the weighing surface 25.

In order to allow a passenger to load a bag onto the weighing device 11 with relative ease, the weighing surface 25 is located at the front of the kiosk 10 (i.e., in front of the front surface 13), as this avoids the need for the passenger to twist or lean to the side, as would be the case if the weighing device 11 was positioned adjacent one of the side surfaces 15, 16 of the kiosk 10. The weighing surface 25 is also positioned as low as possible, and is preferably at a height of 30 cm or less, more preferably 25 cm or less, and in the most preferred arrangements the weighing surface is 20 cm or less above the normal ground floor level.

Figure 4 shows a schematic representation of the connections within the kiosk 10 and to the weighing device 11. Within the kiosk 10, the screen 19, reader 20, card reader 21, key pad 22 and printer 23 are controlled by connections 30 to the computer 31. The computer 31 is connected to a power supply 32 by power lead 33. The power supply 32 is connected to an external mains power source 34 by the mains power lead 35. The power supply 32 may provide power directly to any of the screen 19, reader 20, card reader 21, key pad 22 or printer 23, or power could be supplied to these components indirectly via the computer 31. The power supply 32 may also feed power to the load cell 36 provided in the weighing device 11, either directly using a power lead 37 from the power supply 32 as shown, or indirectly via a feed 38 from the computer 31 or a supply from the indicator 39. The load cell 36 is arranged to assess the weight of any item presented on the weighing surface 25 (see Fig. 3a). The operation of the load cell 36 may be controlled by the computer 31 using the feed 38, and this could also supply data of the baggage weights to the computer 31.

An indicator 39 is provided within the kiosk 10 for displaying the weights measured on the load cell 36, to allow calibration and for an inspector to check the accuracy of the weighing device 11. The measured weights may be read on a screen 40 provided on the indicator 39 or by using a connection to a weighing data access point 41, such as a USB or Ethernet connection. The indicator 39 is arranged to receive a signal of the weight measured by the load cell 36 via a tamper proof connection 42, preferably as a digital signal. The indicator 39 converts the signal into a weight measurement that is displayed on the screen 40. The weight determination takes place within the kiosk. The indicator 39 constantly compares the consecutive weight measurements that it receives from the load cell 36, and when a specified number of identical measured weights are received in a row, a value for the recorded weight is created.

The reason for doing this is that when a bag is lowered on to the weighing surface 25, the measured weight will increase from zero up to the total weight of the bag. Sometimes a passenger may not release the bag completely and this can affect the measured weight; the measured weight will fluctuate ever so slightly. To overcome this, the indicator 39 is arranged to send for a weight measurement many times a second, for example, five times a second and more preferably, ten times a second. The indicator 39 then assesses the sequence of weight measurements it receives from the load cell 36, and once a number of identical consecutive weight measurements are returned, for example more than 5 weight measurements and more preferably 10 identical consecutive weight measurements, the measured weight is recorded as the weight of the bag. The recorded weight is displayed on the screen 19 for the passenger to read. An audio statement may also be produced to announce the recorded weight of the bag.

The recorded weight is also written to an archive 43 provided within the indicator 39, where it is logged against a unique archive number. The logging of a value for the recorded weight only once certain criteria have been met helps to prevent the archive 43 from becoming filled up too quickly by irrelevant data. The archive number is a six digit (or larger) number and each recorded weight is allocated to the next available archive number in turn. Details of the recorded weight and the archive number are sent via the data connection 44 to the computer 31.

As part of the check-in procedure using the new self-service kiosk, the passenger may be asked to pay excess baggage fees based on the recorded weight of the one or more bags. In order to gain trade acceptance of the kiosk 10 and weighing device 11, certain measures have been put in place. The first is that the load cell 36 of the weighing device 11, the indicator 39 within the kiosk 10 and the connection 42 between the two are all made tamper proof. Consequently a routine inspection should be sufficient to certify that the kiosk 10 is weighing items accurately and that it has not be tampered with.

The second is that the kiosk is provided with the archive 43 to keep a secure record of all the recorded weights. This is because the passenger's primary display for reading the recorded weight is on the screen 19 of the kiosk 10 (the screen 40 of the indicator 39 is unlikely to be visible at all, and if it is, it will only be visible as a secondary display). As the passenger is being requested to make a payment on the basis of the weight that is displayed indirectly on the screen 19 of the kiosk 10, a system must be put in place to record the data so that appropriate compensation can be made in the event of erroneous weight measurements. The archive 43 is also made tamper proof. It also provides a useful record of the load cell performance data.

Thirdly, the archive number for the recorded weight is communicated to the passenger, so that in the event the load cell 36 is found to have been weighing incorrectly, the archive number can be traced, a corrected weight determined and the passenger reimbursed as necessary. The archive number for each recorded weight is preferably printed on the receipt given to the passenger, and this information may be presented either as the actual archive number or in an encrypted form, for example, as a bar code printed on the receipt. In one embodiment, therefore, a print command corresponding to the archive number (or archive numbers for more than one bag) is transmitted from the computer 31 to the printer 23 via the connection 30. If desired, the archive 43 could record other details, such as the passenger name, the date and time of the recorded weight measurement, the booking reference, and even the payment details of the credit or debit card used to pay the excess baggage fee.

The computer 31 is further provided with a data connection 45 to the internet. In the example shown, a router 46 is provided to access the internet. In addition to the wired data connection 45, the computer 31 can be provided with a connection 47 to a mobile network communications device 48 that is able to send messages via the internet using the mobile networks, such as the 3G network. The primary mode of communication for the computer 31 to the internet might be via the data connection 45, for example, an ADSL line or similar, and the mobile networks communication device 48 provided as a back-up mode of communicating with the internet in the event that there was a problem with the primary mode.

As shown in Figure 2, the self-service kiosks 10 may be arranged as an array of kiosks 10 standing side by side in a central area of the departure hall 1. The kiosks 10 can also be arranged in circles, for example, of four or more kiosks 10, with the kiosks 10 arranged sufficiently close to one another in order to prevent unauthorised interference with the power supply or communication cables 35, 45. Locating the weighing device 11 at the front of the kiosk 10 helps to reduce the footprint of the kiosk 10. It also means that the rear surfaces 14 of the adjacent kiosks can be positioned close together, e.g., when the kiosks are arranged in a circle, to prevent access to the rear 14.

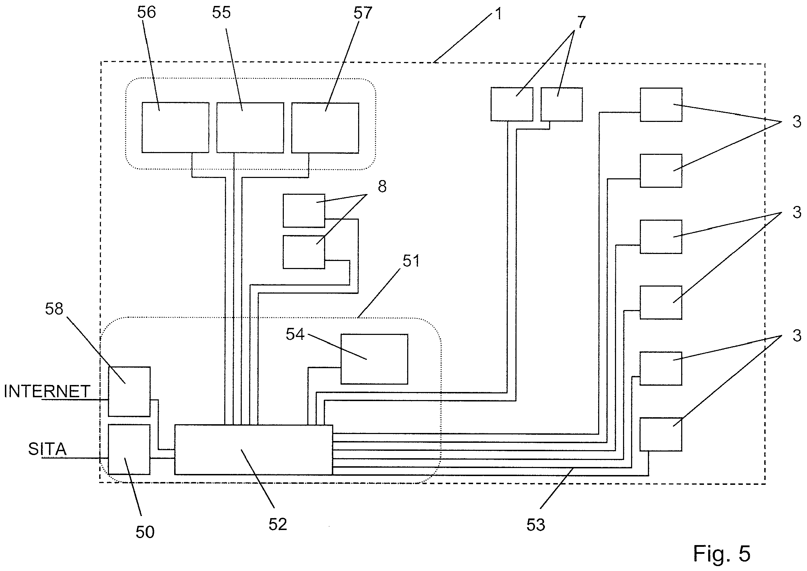

Figure 5 shows a schematic representation of the data network for the departure hall 1 of Figure 1, i.e. a conventional departure hall 1. The network is arranged to receive and send Type B messages across the SITA network through a SITA server 50 located within the airport infrastructure, for example, within a communications room 51. The SITA server 50 is connected to a hub 52, which in practice may be multiple servers and network communication devices that direct the Type B messages to their final destinations. The hub 52 is connected by data connections 53 to each of the manned check-in desks 3, the airline specific self-service check-in kiosks 7 and the CUSS kiosks 8. Within the airport infrastructure connected to the hub 52, sometimes a local departure control system (DCS) 54 is provided, e.g., within the communications room 51. The local DCS 54 could be under the control of and operated by the airport and may be hosted locally or at a remote location. In some airports nowadays, due to the costs associated with running a DCS, a separate legal entity, such as the ground handler, may provide the local DCS 55 for the airport, and this may be connected to the hub 52 using the airport network. This DCS 55 operated by the ground handler may be in addition to or instead of the airport operated local DCS 54. Typically a plurality of DCSs will be controlling the departures for the airlines at any given airport. The ground handler may also have an application server 56 connected to the hub 52 for providing other services, such as the generation of manifests for the above wing and below wing ancillary services. Additional application servers 57 may be connected to the hub 52 for the provision of further services in connection with running the airport. The hub 52 may also be connected by a router 58 to the internet in order to provide web based services for the various companies that wish to operate within the airport infrastructure (i.e., within the airport LAN).

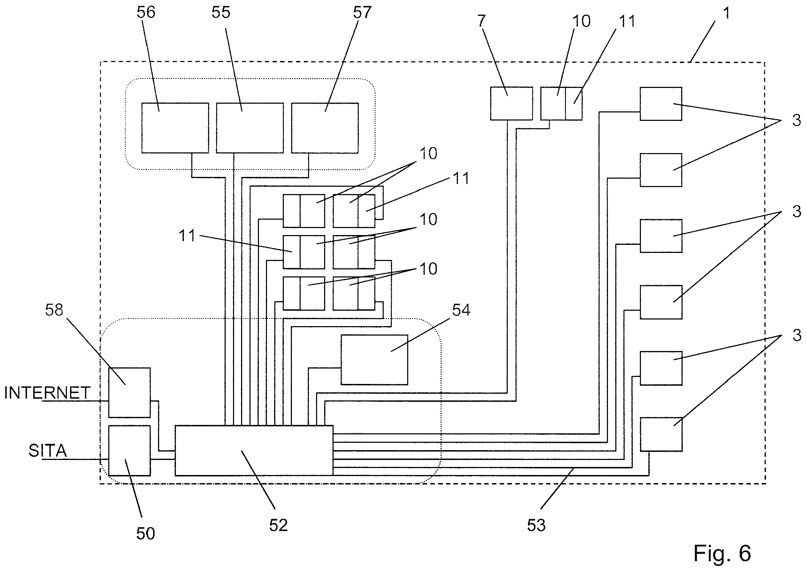

Figure 6 shows a schematic representation of the modified departure hall 1 shown in Figure 2. The network connections are essentially the same with the new self-service kiosks 10 connected to the hub 52 in place of the CUSS kiosks 8. In addition, the new self-service kiosks 10 may also replace the airline specific self-service kiosks 7 in the airline branded areas. More preferably, the new self-service kiosks 10 would be connected to a new router that is independent of the existing airport network architecture.

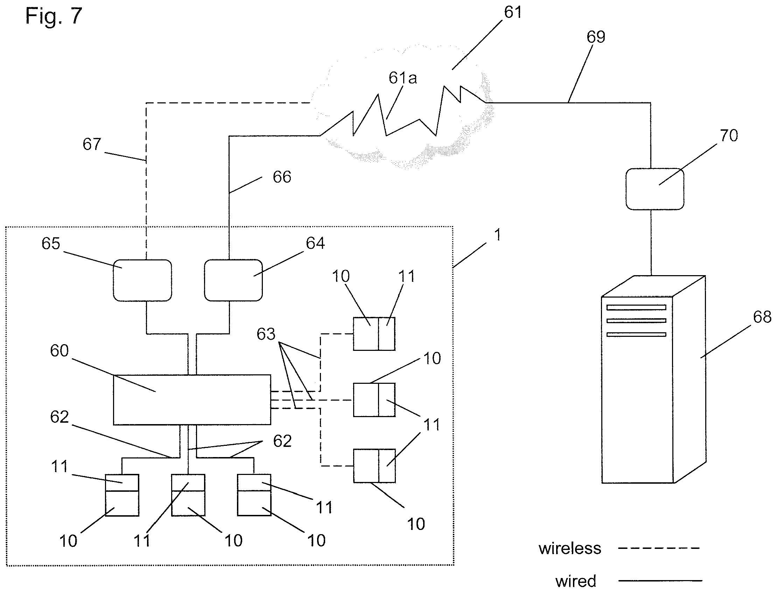

Figure 7 illustrates a simplified representation of the network incorporating the preferred system of the present invention. Figure 7 shows a departure hall 1 having a plurality of the preferred self-service kiosks 10 incorporating a weighing device 11. The kiosks are connected to a router 60 that provides a communication link with the internet 61. The kiosks 10 within the departure hall 1 may be connected to one or more of these routers 60, and the router 60 may be an existing router 58 (see Figure 6) of the airport infrastructure, or it may be an additional router 60 that is provided specifically for the new kiosks 10. A series of communication links 62, 63 are provided for the kiosks 10 to communicate with the router 60. These can be wired communication links 62, for example, data cables feeding electrical or optical signals, or they may be wireless communication links 63 transmitting data via radiowaves, microwaves, or other parts of the electromagnetic spectrum.

In Figure 7, the router 60 is shown providing a hub for the plurality of self-service kiosks 10. An alternative arrangement would be to provide individual routers 60 for each or some of the kiosks 10. The important aspect with all of these arrangements, however, is that each self-service kiosk 10 is linked to the internet 61 for the control of its operation; the kiosks 10 do not require a connection to the SITA network or other IATA messaging network in order to check in passengers and update the DCS 54, 55, and are essentially independent of the SITA network, though of course an additional connection to the SITA network may be provided if desired. As a result, the router 60 may be just a simple router, in contrast to the complex network connection devices provided in the airport's hub.

The router 60 is shown provided with two modes available for connection with the internet 61. The router 60 has a wired connection 64, such as an ADSL line for a broadband connection to the internet 61, that it would use as its primary mode 66 of connection. The router 60 is also provided with a mobile networks communication device 65 for transmitting and receiving data via the internet 61 using the mobile networks, such as the 3G network. The router 60 would select this secondary mode 67 of communication with the internet 61 in the event of a communication failure using the primary mode 66.

The plurality of self-service kiosks 10 communicates, via the internet 61, with a remote computer system 68. The remote computer system 68 may be connected to the internet using conventional data connections 69 and exchanges 70. The remote computer system 68 and its interaction with the many other computer systems of the airlines, airports, etc., will be explained in greater detail below.

The structure of the remote computer system 68 can take many forms, as those skilled in the art would be all too aware. Systems architecture is a rapidly developing area of technology and the form of both the software and hardware is evolving all the time. However, the important aspect from the perspective of the present invention, is that all the communications to the remote computer system 68 is via the internet 61 using internet based communications (such as by sending encrypted messages that are routed through the internet); no communication needs to pass through the existing IATA messaging networks (SITA) or the airport main frames.

The self-service kiosks 10 of the present invention provide analogous checking-in functions to the conventional CUSS kiosks 8. However, they may also offer facilities for checking in baggage where the airline's excess baggage policies impose fees on either an excessive weight of baggage or an excessive number of bags. Previously, the passenger would have had to use the manned check-in desks 3. Additional facilities such as adding passport numbers or other APIS information to the passenger records can also be provided, and where the airline policy stipulates, a fee can also be charged to the passenger to cover the cost of updating this information. Fees can also be charged for the printing of boarding passes and for any other aspect of the check-in procedure, for example, as a result of selecting priority through security or priority boarding. Previously there was no mechanism provided in the self-service kiosks to process payments for these services.

The self-service kiosks 10 of the present invention achieve this by performing a different check-in method and by drawing passenger records from different data sources to the conventional check-in methods performed by the CUSS kiosks 8, the airline specific self-service kiosks 7 and the manned check-in desks 3 of conventional departure hall arrangements.

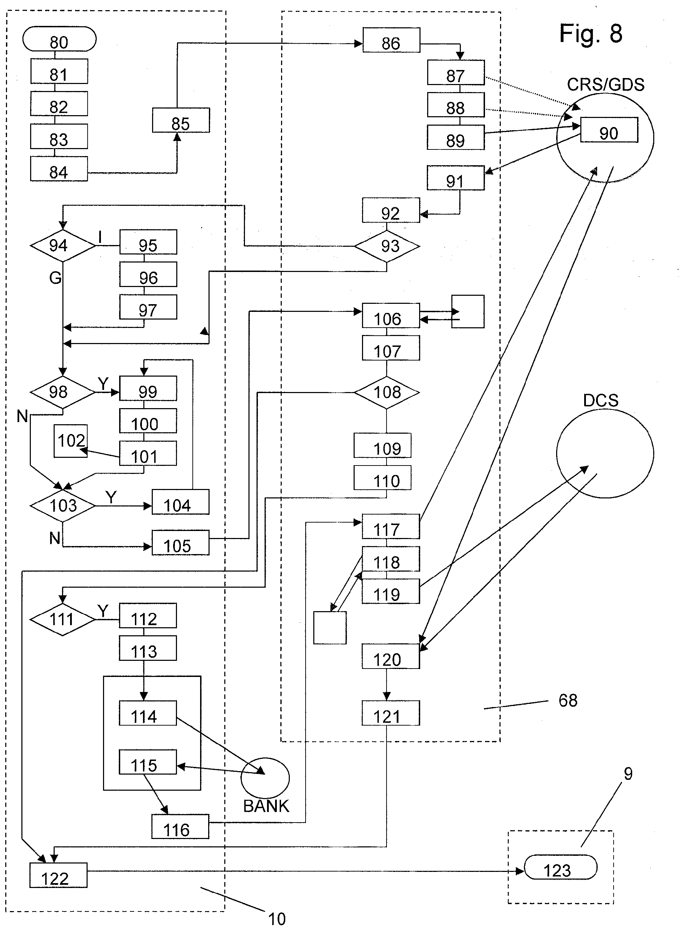

An example of a check-in procedure using the preferred self-service kiosk of the present invention will now be described below. When a passenger approaches the self-service kiosk 10, he/she would be greeted with an introductory screen display 80 as shown in Figure 8. The passenger is prompted to select the airline that he/she is travelling with from an airline selector (step 81) and normally this would be by touching the name or logo presented on the screen that the passenger is flying with. In step 82 the passenger selects the airline. A prompt is generated on the screen 19 requesting the passenger to enter his/her reservation code (step 83). This is typically a six digit number made up of letters and numbers. The passenger enters his/her reservation code in step 84 by typing in the characters on a virtual keyboard generated on the screen 19.

The details of the airline and the reservation code are transmitted from the self-service kiosk 10 to the remote computer system (RCS) 68 in step 85. The kiosk also includes a code in the message representing the particular airport that the kiosk is located in. These details are transmitted via the internet; not the SITA network nor any other dedicated network between the reservation systems and DCSs. In step 86, the RCS 68 looks up the web address for the airline's reservation system from a library of addresses. In step 87, the RCS 68 contacts the airline's reservation server 87 using the internet and transmits the reservation code in step 88. This may be the airline's own Computerised Reservation System (CRS), a Global Distribution System (GDS), or any other reservation system. In step 89 it transmits a request for the passenger name record (PNR) for the passenger using the kiosk 10. A response, step 90, is received from the airline's reservation system and the PNR is transmitted via the internet 61 to the RCS 68 in step 91. The PNR may comprise up to 34 fields of information and preferably all the available fields are transmitted to the RCS 68. The RCS 68 processes the information in the PNR relating to the passenger and the immediate flight (step 92), in order to extract the relevant details, in particular the e-ticket information and any baggage details which may be prescribed in the SSRs.

The RCS 68 will also determine from the PNR whether the passenger is travelling alone or in a group (step 93). If multiple passengers are listed on the same reservation, then the passenger is prompted to select whether they would like to check-in as a group (G) or individually (I) (step 94). If the prompt to check in or check in baggage individually is selected, then a list of all passenger names is created 95 and the passenger is prompted to select a name from the list of passengers 96. The passenger selects his/her name in step 97.

Where a weighing device 11 is provided on the kiosk 10, in step 98 the passenger is requested to select whether they have any baggage (yes/no). If the passenger selects "yes" in step 99, the passenger is prompted to place an item of baggage on the weighing device 11 and press the button marked "continue" (step 100). The kiosk 10 weighs the baggage and writes the recorded weight to the archive 43 (step 101). An archive number for the recorded weight is generated. The recorded weight is also displayed on the screen 19 of the kiosk 10 (step 102).

The passenger is then prompted, in step 103, to select whether they have a second item of baggage. If the passenger returns a "yes" command in step 104, then steps 99, 100 and 101 are repeated for the second item of luggage, a recorded weight will be written to the archive 43 and an archive number will be allocated (step 102). The passenger is prompted for further items of baggage until all of his/her bags have been counted and weighed.

In step 105, the baggage data comprising the recorded weight for each bag is transmitted via the internet 61 to the RCS 68. In step 106, the RCS 68 looks up the baggage allowance of the airline for the ticket the passenger is travelling on from a library of baggage policies. The baggage allowance is then calculated in step 107 and an assessment 108 is made as to whether the passenger's baggage is within or outside his/her baggage allowance. If outside, then the value of the excess baggage fee applicable is calculated in step 109. In step 110, the value of the excess baggage fee is transmitted from the RCS 68 to the kiosk 10 via the internet 61. The excess baggage fee (or fees) is displayed on the screen 19 and the passenger is prompted with a "pay now" option (step 111). If the passenger selects "pay now" in step 112, then the value of the excess baggage fee is sent to the card reader device 21 in order to process the payment (step 113). In step 114 the passenger is prompted to follow a set of instructions (which may be on the screen of the card reader device 21 rather than the screen of the kiosk 19) to complete the transaction. During this step, data is transmitted via the internet 61 to process the transaction in accordance with conventional web-based transaction protocols incorporating security features such as the "chip and pin" technology. In step 115, a message confirming that the transaction has been successful, is received from the card reader device 21 and the validation code is stored to a memory.

In step 116, the kiosk 10 transmits a confirmatory message to the RCS 68, via the internet 61, to update the passenger's reservation with his/her new baggage allowance following the payment of the excess baggage fees. In response, the RCS 68 updates the passenger's reservation on the airline's reservation system, via the internet, by transmitting a command to update the PNR with the new baggage allowance (step 117). In step 118, the RCS 68 looks up the web address for the relevant departure control system (DCS) that is responsible for the management of the passenger's flight. The DCS is contacted and a command is transmitted to update the passenger's reservation details on the DCS, to confirm that the passenger is "checked in" and that any necessary excess baggage fees have been paid (step 119). This may involve accessing a seat map for the flight, selecting a reserved seat on the flight and changing its status to "unavailable". In step 120, acknowledgements are received from the airline's reservation system and from the DCS confirming that the respective passenger records have been updated. Messages may also be sent back and forth to a computerised ticketing system handling the e-ticket, to change the status of the ticket (or coupon for the sector) on that system.

In step 121, a message is transmitted from the RCS 68, via the internet 61, to the kiosk 10 announcing that the check-in process is complete. The printer 23 prints any necessary boarding passes and acknowledgements, as well as a receipt for the passenger, in step 122. The receipt includes details of the archive number(s) for the recorded weight(s) stored on the archive 43. Baggage tags for the baggage are also printed. A boarding pass for the passenger is printed. In step 123, the passenger takes the items from the printer, attaches baggage tags to his/her baggage, drops his/her baggage off at the rapid baggage drop 9 and proceeds to security and the air-side facilities of the departure terminal.

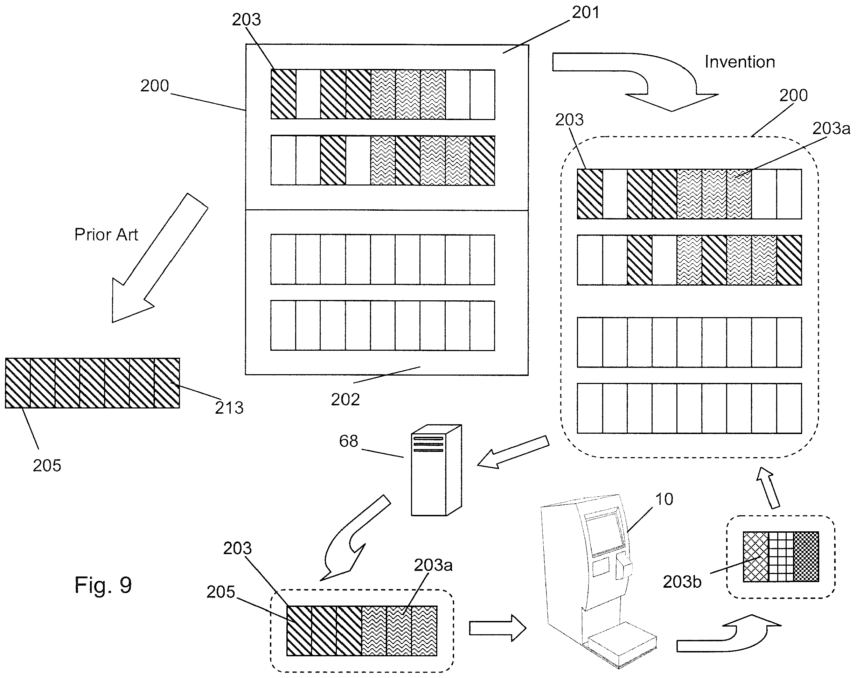

When a passenger books a trip, a record called the Passenger Name Record (PNR) is established on the airline's reservation system. The PNR 200 may be created many days or even months before the first of the flights is due to take place. The PNR is allocated a PNR number (sometimes referred to as an Airline Record Locator), which is usually a six digit alphanumeric number corresponding to the reservation code a passenger is given when booking his/her flight. The trip may comprise one, or more usually, two or more flights, and the PNR contains e-ticket information and payment details for each of those flights. A schematic representation of the PNR 200 is illustrated in Figure 9.

In the example shown, the PNR 200 contains the flight details for an outward 201 and a return journey 202 respectively. In the example, both the outward 201 and return 202 journeys are single flights, but in many instances each journey could be made up of two or more flights. These are often referred to as 'sectors' and the e-ticket will comprise a 'coupon' for each sector of the trip.

The PNR 200 contains segments of code 203, each holding details relating to the trip, e.g., the name of the passenger, a title, a reservation code, an identification of the flight and additional details relating to the purchase of the flight, for example, the e-ticket details (e-ticket number, a coupon for each sector of the trip, the vendor's details, the purchaser's details and the transaction details, etc.). The PNR 200 may also include the passport number and any special service requests (SSRs), specifying items like whether the passenger requires assistance to the plane, has a small child sharing his/her seat, or dietary requirements. The SSR fields are also used by the airlines to denote details relating to baggage policy, for example, number of bags permitted, and to record whether the passenger has selected on-line check-in. Where the passenger is travelling in a group (which may be up to nine passengers), the PNR 200 will include names of the other members of the group as well as their e-ticket information and other details.

An illustration of the possible data fields in a PNR is illustrated in Table 1.

**Table 1 - The 34 recommended data fields for a Passenger Name Record**

| Data Field | Data Category |
|---|---|
| 1 | PNR record locator code |
| 2 | Date of reservation |
| 3 | Date(s) of intended travel |
| 4 | Name |
| 5 | Other names on PNR |
| 6 | Address |
| 7 | All forms of payment information |
| 8 | Billing address |
| 9 | Contact telephone numbers |
| 10 | All travel itinerary for specific PNR |
| 11 | Frequent flyer information |
| 12 | Travel agency |
| 13 | Travel agent |
| 14 | Code share PNR information |
| 15 | Travel status of passenger |
| 16 | Split/Divided PNR information |
| 17 | Email address |
| 18 | Ticketing field information |
| 19 | General remarks |
| 20 | Ticket number |
| 21 | Seat number |
| 22 | Date of ticket issuance |
| 23 | No show history |
| 24 | Bag tag numbers |
| 25 | Go show information |
| 26 | OSI information ('Other Service Information'- General remarks, e.g. connecting flights, V.I.P. passenger, etc.) |
| 27 | SSI/SSR information ('Special Service Information / Request' - Open fields, e.g. unaccompanied minor, wheelchair user, etc.) |
| 28 | Received from information |
| 29 | All historical changes to the PNR |
| 30 | Number of travellers on PNR |
| 31 | Seat information |
| 32 | One-way tickets |
| 33 | Any collected APIS information ('Advanced Passenger Information System'; a 'passenger manifest' mentioning name, nationality, passport number, date of birth, etc.) |
| 34 | ATFQ fields ('Automatic Ticket Fare Quote', i.e. price of the ticket) |

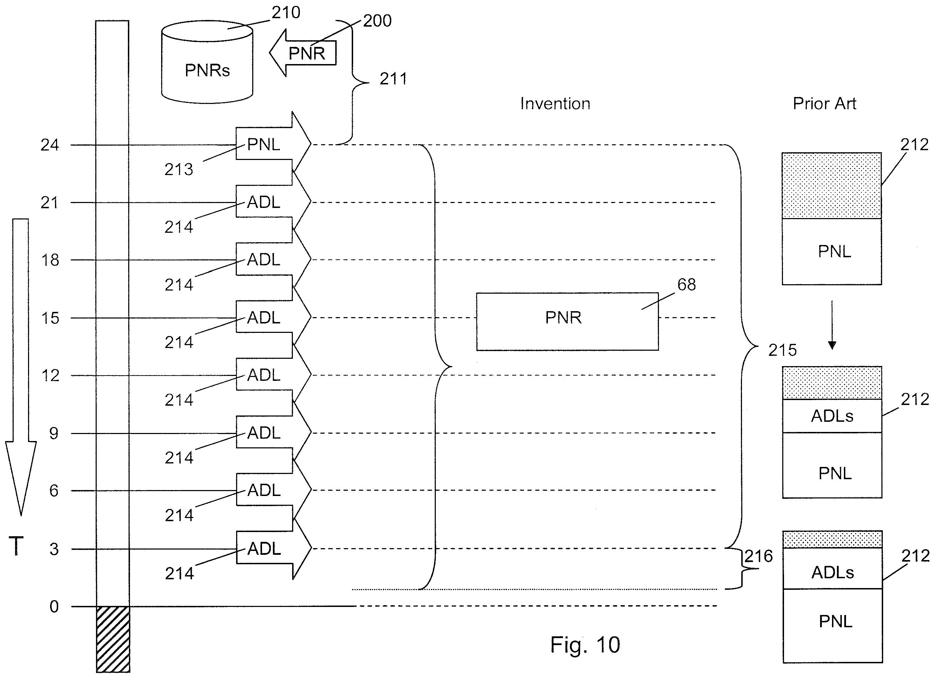

Up until around 24 hours before a flight is due to take off (take off, T minus 24 hours), the PNRs 200 that are stored on the airline's reservation system 210 (see Figure 10) represent the principal source of information relating to the reservations for all the passengers travelling on that flight. As new passengers book onto the flight, a new PNR 200 is added to the airline's reservation system 210, as shown in the top left hand corner of Figure 10. The period from when a flight is first available for bookings up to T-24 hours is shown as 211. For some airlines, the period 211 will cease at a time other than T-24 hours, e.g., at T-72 hours or T-48 hours. The PNRs are stored and processed on the airline's reservation server 210 during this period 211 under the control of the airline. During this time, the Departure Control System (DCS) 212 will be unaware of the passenger details for this flight.

At T-24 hours, control of this reservation information is partially handed over to the DCS 212 that the airline has chosen to be used at the airport. This may be an internal DCS 54 provided within the airport infrastructure, a local DCS 55 provided by a separate legal entity, or a remote DCS that is run by another operator. The transfer of control starts when the airline's reservation system 210 sends out an abbreviated form of the passenger records of the flight to the DCS 212. The abbreviated details are contained in a Type B message, a form of electronic telex, that is distributed via the private wide area networks, such as the SITA network, to the DCS 212. The message will initially identify the flight in the header of the message and will then list the details for the various passengers that have reserved a seat on that plane as a batch of abbreviated passenger records. The Type B message is called a Passenger Name List (PNL) 213, and usually due to the size of the PNL message 213, it is sent in several parts. As charges apply to the sending of messages on the SITA and other private networks, the PNL message 213 contains only the minimum information required to process the passengers through departures. For example, details such as the e-ticket information other than perhaps the e-ticket number, would not be included in the PNL message 213 that is sent to the DCS 212 because it is not needed for the check-in and departure procedures. In the event that there is a dispute about an item on the reservation, the PNR 200 can be sent to a CUTE terminal 3 in a Type B message (for a fee) to check the original reservation details.

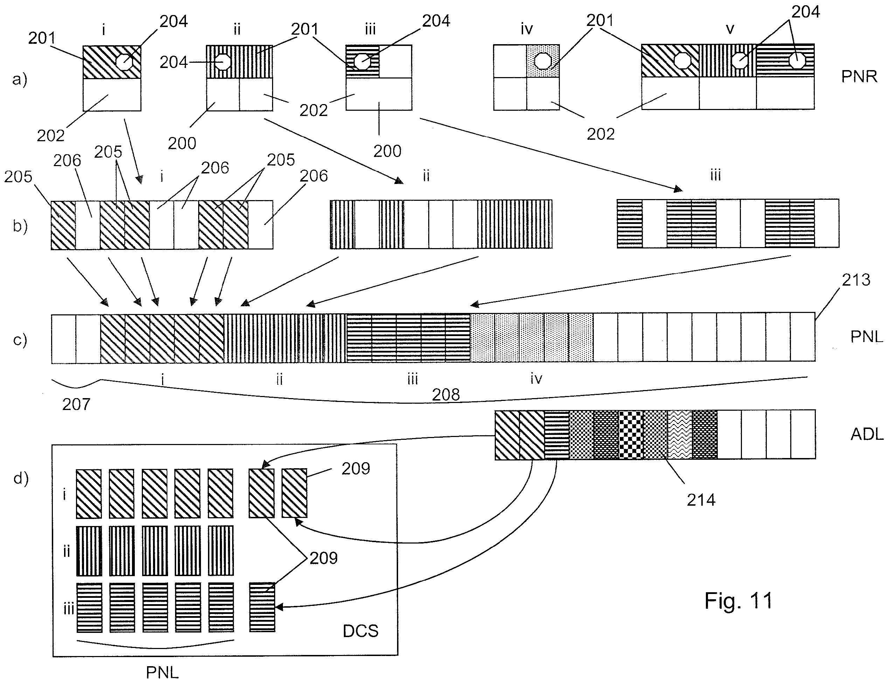

In Figure 11, five examples of PNRs 200 are shown in row (a) labelled as (i), (ii), (iii), (iv) and (v) respectively. In Example (i) the PNR 200 relates to one outbound journey 201 and one return journey 202, of one flight each. The shaded area 201 represents the immediate flight for the passenger in these examples. In Example (ii) the PNR 200 holds details of one outbound flight 201 and a return journey 202 made up of two flights. In Example (iii), the outbound journey 201 in the PNR 200 is made up of two flights, the first of which is the immediate flight for the passenger. In Example (iv) the PNR 200 contains details of four flights, two for the outbound journey 201 and two for the return journey 202. The second of the outbound journeys is the immediate flight for this passenger. In Example (v) a group of three passengers are travelling on one outbound flight 201 and one return flight 202 under the same booking reservation code. For each of the shaded and non-shaded areas in the PNR 200, there will be a coupon 204 for each sector of the trip for each passenger. In Example (v), the PNR 200 will contain three e-tickets, one for each passenger, with each e-ticket having a coupon relating to the immediate flight.

In row (b) of Figure 11, the segments of code 205 in the individual PNRs 200 that relate to the immediate flight are shown shaded. For example, the first shaded segment 205 of the first PNR 200 may be a data field providing the outbound flight details (flight number, date of flight, class of seat, three digit departure and arrival airport codes, passenger status, departure time, arrival time, etc.) of a first sector and the next unshaded segment 206 may be a data field providing the return flight details or some other item of information that the DCS 212 does not require to process the passenger through check in and departure. The unshaded segments of code 206 may also represent the empty data fields, for example, the passenger's passport number if this has not been submitted yet. Thus, only the key segments of code 205 for each passenger are collected and assembled into a data string for the PNL 213 as shown in row (c).

The PNL message 213 consists of a short header 207 containing a reference identifying the flight, and then following that the body of the message 208 is made up of the key segments of code 205 relating to each passenger record in turn (e.g., the shaded segments in the PNR examples (i), (ii), (iii), (iv) etc. in row (a)). Once the Type B message has passed through the SITA network and is received by the DCS 212, the key segments of code 205 relating to each passenger are dropped into the corresponding data field in the DCS 212, as shown in row (d) of Figure 11.

As the time of the flight approaches, additional information 209 may be added to the DCS 212 record. This can be via an Additions and Deletions List (ADL) message 214 or through the information being updated locally on the DCS 212 at the airport. Typically, once the PNL message 213 has been sent to the DCS 212, every 2-3 hours prior to the flight an ADL message 214 is sent out from the airline's reservation system 210, via the SITA network, with details of the additions and deletions to the PNL 213 information. When checking in on-line, a passenger may update their PNR 210 by submitting details of their passport number, booking a particular seat on the flight, etc. The act of checking in on-line may also change the status of the reservation from "open" to "checked in". A passenger may also cancel his/her flight, or swap the flight for a later one. New passengers may also have made last minute bookings during this time. Such additional details on the airline's reservation system 210 would be sent as a batch of information (to reduce costs) as an ADL message 214 sent to the DCS 212.

These updates are sent to the DCS 212 up to a predefined time before the departure time (T) of the flight. Typically, the last ADL message 214 would be sent three hours before the planned departure time, but this may vary from one airline to another. Once that last ADL message 214 has been sent to the DCS 212, full control of the reservation information is handed over to the DCS 212. At this point, the airline would expect the passengers for the flight to be arriving at the departure hall 1, and any passengers who had not already checked in on-line, would be expected to use either the self-service kiosks 7, 8 or the manned check-in desks 3, in order to complete the check-in process. The on-line check-in facility is normally closed at this point as well. The period between the sending out of the PNL message 213 and the final ADL message 214, e.g., from T-24 hours to T-3 hours, is indicated as period 215 in Figure 10.

The period after the final ADL has been sent out, e.g., T-3 hours until the departure time of the flight at T = 0 hours, when the DCS 212 has full control of the reservation information, is indicated as period 216 in Figure 10. This is the time when the airlines would expect the passengers to be arriving at the airport for their flight, and so it is an appropriate time to close online check in facilities; the passenger can check in using the airport facilities. In practice, even checking in at the airport is closed a set time before a flight, e.g., 40 minutes, so that the last item of baggage or the passenger can make it onto the plane in time, and the requisite manifests produced before the plane takes off. During the period 216, only the records stored on the DCS 212 are required to process the passenger through departures and onto his/her flight. These are the records created by the PNL message 213 as modified by subsequent ADL messages 214.

According to the present invention, the remote computer system 68 is able to access the airline's reservation system during this period 216 after online check in has closed, when up to now the only reason for doing so would be to verify details in an individual PNR because of problems arising during the conventional check in. Preferably an access code in the interfacing software is modified from its default, in order to allow access to the airline's reservation system after the last ADL message 214 has been sent out to the DCS 212, and further to allow the PNR 210 to be updated by the remote computer system 68 during this period 216. Access into the airline's reservation system 210 is by using internet based communications (e.g., by using encrypted messages that are routed through the internet); not by using the existing private networks such as the SITA network or a dedicated circuit between airline servers and the DCS for the flight.

Returning to Figure 9, the difference between the conventional check in procedure and the check in procedure of the present invention, as well as the difference in the data from the PNR 200 that is used in the check in procedure is illustrated. In the conventional check in procedure shown on the left hand side of the figure, just the segments of code 205 that are relevant to the checking in process for the immediate journey 201 are extracted by the airline's reservation system 210 from the PNR 200, to form part of the string of code contained in the PNL message 213 that is sent from the airline's reservation system 210 to the DCS 212. The string of code is sent via the relevant private network as a "Type B" message or telegram to the DCS 212, the message containing the private WAN address for the DCS 212, for example, a seven digit IATA code, indicating the delivery address of the DCS 212.

In the present invention, preferably a copy of the PNR 200 stored on the airline's reservation system 210 is made and sent to the remote computer system 68. This is done at the request of the remote computer system 68 using communications that are sent through the internet, for example, by communicating using encrypted messages that are routed through the internet. In other words, a message cast in accordance with the usual internet protocols, for example, using Secure Sockets Layer (SSL), is transmitted to the relevant web address of the airline's reservation system via the internet, the message including a database query statement requesting a copy of the PNR for a given reservation code. The message would be routed using standard internet procedures, for example, the router for the remote computer system 68 would determine the best available route for the message through the internet, and the message would be passed from internet router to internet router until it reached its destination router. The message might be split into different packets of data that are sent to the destination router by different routes through the internet. Each packet of data may pass through five or more routers to complete its journey, often more than ten routers, and sometimes fifteen or more routers, in order to pass from one side of the internet to the other, on its way between the remote computer system 68 and the airline's reservation server or the server of the DCS 212 (as indicated by the zig-zag path 61 a through the internet 61 in Figure 7). This is in contrast to dedicated circuits where the message would be sent from a modem (though a router could be used) directly to the modem of the destination server, all packets of data travelling along the same predetermined path, through a circuit that is permanently open. In response, the airline's reservation system locates the PNR and returns a copy of the data fields for that PNR in a message, cast in accordance with the usual internet protocols (e.g., an SSL message) that is sent to the web address of the remote computer system via the internet 61. The PNR 200 is parsed and the e-ticket, SSR information and additional data segments are extracted by the remote computer system 68. The parsed information may contain some or all of the data segments 205 that are sent to the DCS 212 as well as additional data segments 203a that can be used by the remote computer system 68 during the check in process. A problem recognised by the inventors is that the information that is sent to a given DCS 212 by an airline reservation system is usually insufficient to determine the baggage allowance for the passenger using generic rules, as the way the baggage information is presented, if at all, will vary considerably from one airline to another. This is why in the present invention, the remote computer system 68 downloads a copy of the PNR 200. The PNR 200 provides additional information that the remote computer system 68 can analyse and make a judgment on which baggage policy applies to the passenger's ticket.

From the full reservation record, the computer system 68 can determine, using a database of baggage allowance policies for different airlines, which baggage allowance should apply for the ticket, check whether the passenger is within his/her baggage allowance by using the values from the recorded weights determined by the kiosk 10, and output a statement confirming whether the passenger is within his/her baggage allowance. The PNR 200 information may be used for other services too. The passenger may be offered the opportunity to purchase additional baggage allowance, for example, for additional baggage weight or for an additional bag. Once any necessary fees have been collected via the kiosk 10, the e-ticket information is then used by the remote computer system 68 to check in the passenger for the flight. During this process, the e-ticket information may be checked to make sure the ticket is valid and that the coupon can be used for this sector of the trip. Assuming the identity of the passenger matches the ticketing information, the remote computer system is able to check in the passenger by obtaining a seat map from the DCS, which shows all the seats and status (blocked / reserved / emergency / special / available / unavailable), and can then confirm a seat using the DCS software (e.g., Navitaire DCS), changing the seat status usually from "reserved" to "unavailable". For unallocated seats a similar process can be followed taking the next available seat number but the number is not conveyed to the passenger. When all the seats are marked as unavailable, further passengers will be denied check in.

The kiosk 10 also checks to determine if the passenger's reservation record 200 is sufficiently complete and that the details are all in order. For example, it checks to make sure that the PNR 200 includes details of the passenger's passport, such as passport number, issuing office and expiry date. If these details are missing, then the passenger is prompted to offer up his/her passport to the reader 20, an image of the passport page is taken and the image is processed to extract the relevant information. This additional data 203b, the recorded weights for the baggage and any further details taken by the kiosk 10, can be fed back to the remote computer system 68 and into the copy of the PNR 200. The remote computer system 68 can then access the DCS 212 to update its PNL/ADL based record of the passenger in order to include one or more of these segments of additional data 203b. The remote computer system 68 can also access the airline's reservation system and update the airline's PNR 200 so that the additional data 203b (e.g., APIS information) can be sent to the DCSs 212 controlling the departures of subsequent sectors of the passenger's journey.

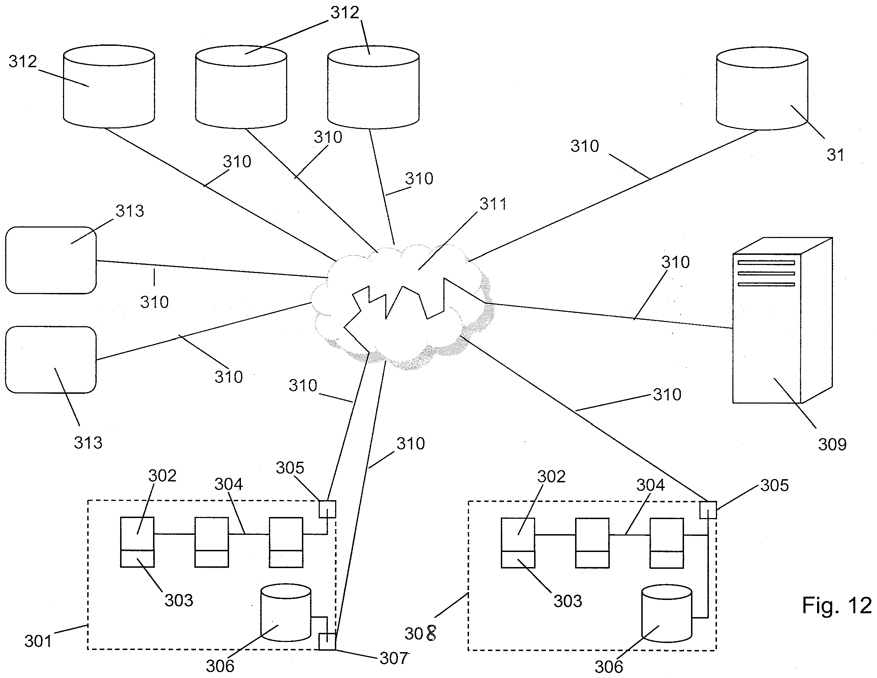

In Figure 12, a schematic representation of a preferred check in system 300 is shown. A first departure hall 301 contains a plurality of self-service kiosks 302, each provided with a weighing device 303 and linked by a data communication 304 to a router 305. The first departure hall 301 is shown provided with a local DCS 306 that, in addition to its conventional connection to the private networks (not shown), is also connected to a router 307. A second departure hall 308 also contains a plurality of self-service kiosks 302, each provided with a weighing device 303 and linked by a data communication 304 to a router 305. For both departure halls 301, 308, the data communication 304 may be a wired or a wireless connection to the router 307. A local DCS 306 of the second departure hall 308, in addition to its existing connections, shares the same router 307 as the kiosks 302. Although the airports in Figure 12 are shown with a single DCS 306 that is hosted locally, in practice there may be no local DCS, or a local DCS that is hosted remotely, and most likely there will be a mix of several remotely hosted DCSs and one or more local DCSs being used.

The kiosks 302 located in the departure halls 301, 308, are linked to a remote computer system 309 by data communications 310 passing messages through the internet 311; the messages are sent using an encryption protocol such as SSL across the internet 311, rather than by using leased lines to an airline reservation system/DCS or other private networks. Each of the kiosks 302 is able to communicate with the remote computer system 309 independently using such internet based communications. These can be by means of wired connections or wireless connections, or a mixture of the two.

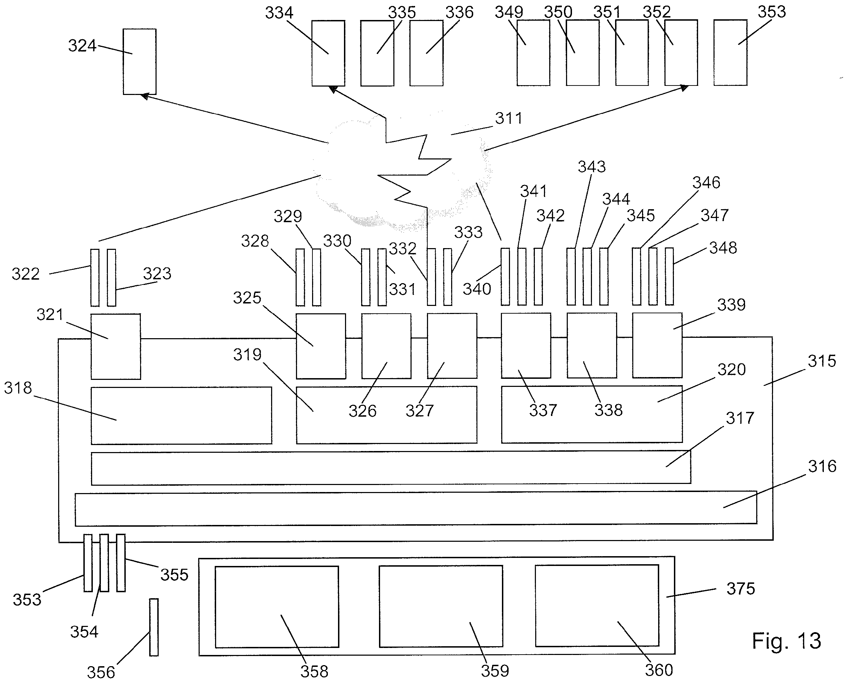

The remote computer system 309 is the same regardless of which airline is selected. Consequently the interface presented to the passenger is the same regardless of airline. The remote computer system 309, using communications that are sent through the internet, can access a plurality of airline reservation systems 312. Once an identification of the airline has been received from the kiosk, the remote computer system looks up a web address for the appropriate reservation system using its library of web addresses of airline reservation systems (database 319 in Figure 13). Similarly the remote computer system 309 is able to exchange data with a plurality of departure control systems 313 using communications that are sent through the internet. Once the DCS has been identified, the remote computer system can look up the web address for the DCS using its library of web addresses of departure control systems (database 320 in Figure 13). Using communications that are sent through the internet, the check in system 300 can also communicate with bank servers 314 to process transactions for excess baggage fees, upgrades, entering passport details or other items.

The remote computer system 309 is shown in more detail in Figure 13. It comprises one or more servers 315 running a suite of software products offering web based services for the kiosk. The main Passenger Services software 316 provides a platform for the Host Systems APIs 317 supporting a plurality of libraries, for example, a Passenger Management System Library 318 (such as PAXMan), a Reservation Systems Library 319 (providing access details for reservation systems like Navitaire Open Skies, CarmenRez, Amadeus Altea, Navitaire New Skies, etc.) and a Departure Control Systems Library 320 (providing access details for departure control systems like Navitaire Open Skies, Damarel L-DCS, Amadeus Altea, Navitaire New Skies, etc.).

The Passenger Management System Library 318 is provided with an application programming interface (API) 321 (such as CarmeRez API) in order to interface with other programs 322, 323, that can communicate, via the internet, with a passenger management system 324 (such as PAXMAN P5T). The Reservation System Library 319 is coupled to a plurality of APIs 325, 326, 327 in order to interface with other programs 328-333 that can communicate, via the internet, with the respective airline reservation system 334-336. For example, a CarmeRez API 325 may be provided with DisplayReservation 328 and ChangeReservation 329 programs to communicate with the CarmenRez reservation system 334. On the reservation system, these applications may activate a GetPNR program or similar program in order to download the PNR to the remote computer system 309. Similarly, an Amadeus Altea API 326 may be provided with DisplayReservation 330 and ChangeReservation 331 programs to communicate with the Amadeus Altea reservation system 335, and a Navitaire Open Skies API 327 may be provided with Display Reservation 332 and ChangeReservation 333 programs to communicate with the Navitaire Open Skies reservation system 336. The Departure Control Systems Library 320 is coupled to a plurality of APIs 337, 338, 339 in order to interface with other programs 340-348 that can communicate with the respective departure control systems 349-353. The Navitaire Open Skies API 337 is shown running a RetrieveCheckInFlights 340 program to communicate, via the internet, with the Navitaire Open Skies departure control system 352. Other programs, such as a GetSeatMap 341 and ConfirmCheckln 342 programs are provided to retrieve and transfer other details to the check in system 300 and communicate these with the kiosk 302. Other APIs could be a Damarel L-DCS API 338 and Amadeus Altea API 339. Other departure control systems include the Navitaire New Skies DCS 349, Amadeus Altea DCS 350, Damarel L-DCS - MAG 351 and Damarel L-DCS - BAA 352, representing a selection of the many local and remote based DCSs.

The main Passenger Services software 316 is shown coupled to a number of programs for communicating with the kiosk 302. For example, a GetTickets 353 program is activated on entering an airline identification and a reservation code. The request for GetTickets 353 may include a code for the airline (e.g., "WW") a code for the airport (e.g., "EMA") and the reservation code (e.g., "WZBKCX"). GetTickets 353 communicates through the suite of software with the appropriate airline reservation system 332-334 in order to return the E-tickets. Other programs such as UpdateTicket 354 and UseTicket 355 programs, are able to use the codes obtained by the GetTickets 353 function to conduct the check in process. The check in operation also runs a CheckTicket 356 function to check the E-ticket information.

In addition, the check in system 300 includes an Airline Information Service 357 holding Reservation System Profiles 358 (such as user credentials and definitions of how to parse for the airline reservation systems, e.g., Navitaire Open Skies). It also holds Departure Control System Profiles 359 (such as user credentials and definitions of how to parse for the departure control systems, e.g., Navitaire Open Skies, SITA Airport Connect at Geneva (run by Servisair) and SITA Airport Connect at Zurich (run by Swissport)). It also holds Airport Profiles 360 (such as the airport codes, e.g., "EMA", "GEA", "ZUR", etc., and details of the reservation systems and departure control systems that apply).

Up until now a problem with providing a common baggage drop areas is that there are no facilities for dealing with the excess baggage policies of the different airlines. As a result, any passenger with overweight baggage that needs to be paid for may still have to repack their baggage or queue up at a separate desk to pay for the excess. Delays to the throughput of passengers may occur as a result. Further fees are becoming more popular in the ticketing structure, particularly for the budget airlines, and yet facilities for processing these may be unavailable at the main service points. These delays reduce the throughput efficiency of the departure hall.

With the modern web-based check in systems, the passenger usually arrives at the airport already checked in with a seat allocated on the flight, usually a specific seat number. The passenger will either have printed off a boarding pass already, received an electronic boarding pass to a phone or other electronic device, or will have one printed off by a kiosk or attendant at the airport. In the present invention, the new baggage drop system scans the boarding pass, checks the baggage is within the baggage allowance and prints the baggage tags. An operator assisting with the baggage drop process does not need to log into and out of different DCSs or airline reservation systems as the information is provided automatically by the baggage drop system. The operating software preferably presents the information in a non-branded way that is not airline dependent. In this way, the passenger will become familiar with it and this also has benefits in terms of staff training as only one baggage drop and tagging procedure needs to be known for a plurality of airlines at a plurality of airports; the interface with the remote computer system is the same regardless of which airline the passenger is flying with or which DCS the airline has chosen.

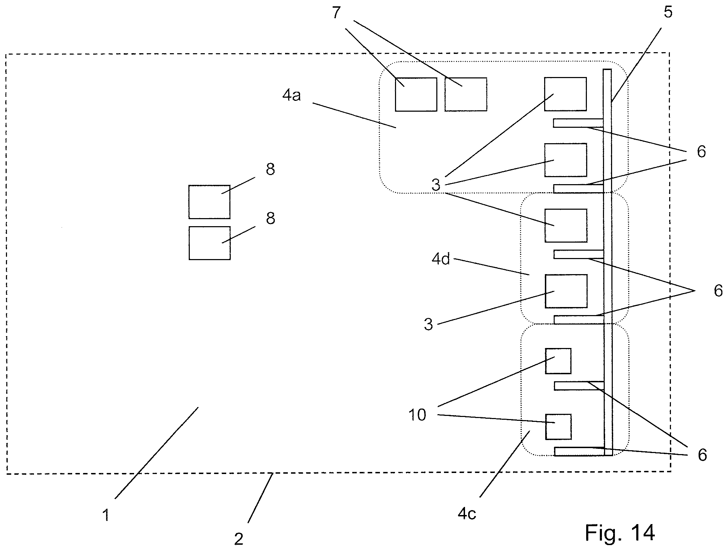

Figure 14 is a schematic representation of how the conventional departure hall 1 shown in Figure 1, can be modified through the incorporation of the common baggage drop kiosks 10 in a common baggage drop area 9 that is used by a group of airlines. As before, a line of manned check-in desks 3 is provided along one side of the departure hall 1. These may be provided in airline specific zones 4a or as a generic zone 4d.

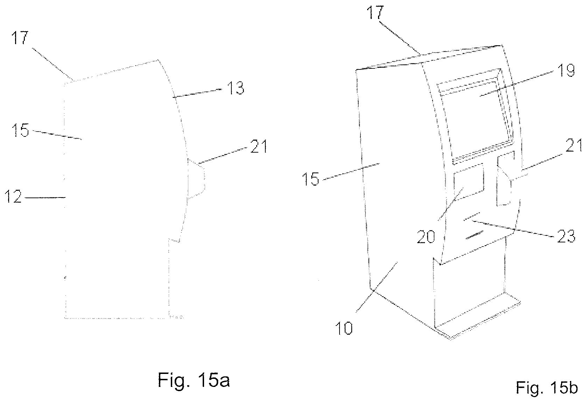

An embodiment of a baggage drop kiosk 10 of the present invention is illustrated in Figures 15a and 15b. Figure 15a is a side elevation of the self-service kiosk 10 and Figure 15b is a perspective view.

The baggage drop kiosk 10 comprises a housing 12 having front 13, rear 14 and side 15, 16 surfaces, as well as a roof 17 and a base 18. On the front surface 13, the kiosk 10 includes a screen 19 for communicating information with the passenger. Preferably it is a touch-screen where the passenger can press virtual buttons by touching specific regions of the screen 19. The front surface 13 also includes a reader 20 such as a bar-code reader for reading boarding passes. It also includes a card reader 21 for processing charges on credit or debit cards. This may include a key pad 22 for entering PIN numbers or the passenger may be able to enter these details using buttons on the screen 19. A printer 23 is also provided on the front surface 13 for printing baggage tags for the passenger's baggage. The screen 19, reader 20, card reader 21 and printer 23 can be entirely conventional components that are mounted into the housing 12. An additional printer may be provided for printing the passenger receipts (not shown).

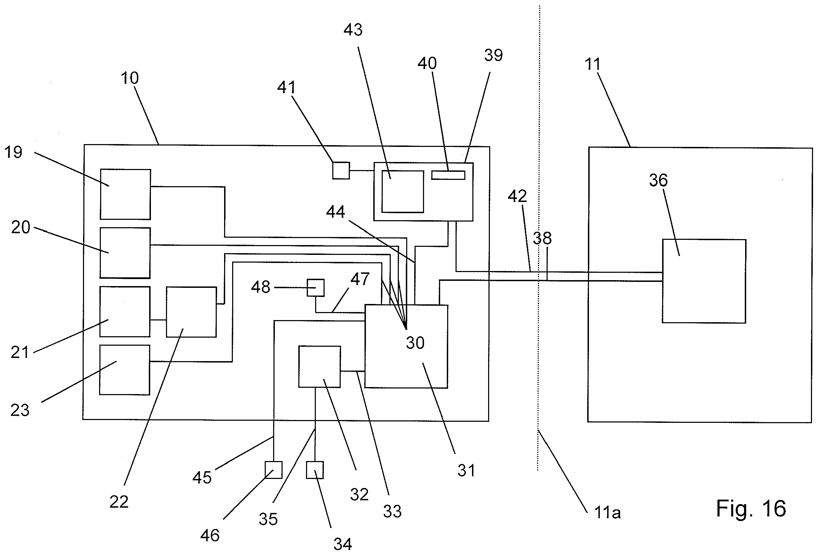

Within the housing 12, a computer is provided (31 in Fig. 16) having a processor arranged to control the operation of the screen 19, reader 20, card-reader 21 and printer 23. In accordance with the present invention, the baggage drop kiosk 10 includes or is coupled to a weighing device 11, and preferably this is provided by the weighing device 11 of the traditional check in desks located under a baggage belt 11 a. If the weighing device is provided as a new component, in addition to being sufficiently robust to withstand heavy baggage or people climbing on the weighing device 11, it must also be accurate. Preferably the weighing device is able to measure to a first decimal place (i.e., to the nearest 100g), but more preferably it is accurate to two decimal places (i.e., it can measure to the nearest 10g). The indicator 39 can be checked periodically, in accordance with standard weights and measures procedures, to ensure that the weighing device 11 is recording weights accurately.

Figure 16 shows a schematic representation of the connections within the kiosk 10 and to the weighing device 11. Within the kiosk 10, the screen 19, reader 20, card reader 21, key pad 22 and printer 23 are controlled by connections 30 to the computer 31. The computer 31 is connected to a power supply 32 by power lead 33. The power supply 32 is connected to an external mains power source 34 by the mains power lead 35. The power supply 32 may provide power directly to any of the screen 19, reader 20, card reader 21, key pad 22 or printer 23, or power could be supplied to these components indirectly via the computer 31. The power supply 32 may also feed power to the load cell 36 provided in the weighing device 11. The load cell 36 is arranged to assess the weight of any item presented on the weighing surface 25. The operation of the load cell 36 may be controlled by the computer 31 using the feed 38, and this could also supply data of the baggage weights to the computer 31.

An indicator 39 is provided within the kiosk 10 for displaying the weights measured on the load cell 36, to allow calibration and for an inspector to check the accuracy of the weighing device 11. The measured weights may be read on a screen 40 provided on the indicator 39 or by using a connection to a weighing data access point 41, such as a USB or Ethernet connection. The indicator 39 is arranged to receive a signal of the weight measured by the load cell 36 via a tamper proof connection 42, preferably as a digital signal. The indicator 39 converts the signal into a weight measurement that is displayed on the screen 40. The weight determination takes place within the kiosk. The indicator 39 constantly compares the consecutive weight measurements that it receives from the load cell 36, and when a specified number of identical measured weights are received in a row, a value for the recorded weight is created.

The reason for doing this is that when a bag is lowered on to the weighing surface 25, the measured weight will increase from zero up to the total weight of the bag. Sometimes a passenger may not release the bag completely and this can affect the measured weight; the measured weight will fluctuate ever so slightly. To overcome this, the indicator 39 is arranged to send for a weight measurement many times a second, for example, five times a second and more preferably, ten times a second. The indicator 39 then assesses the sequence of weight measurements it receives from the load cell 36, and once a number of identical consecutive weight measurements are returned, for example more than 5 weight measurements and more preferably 10 identical consecutive weight measurements, the measured weight is recorded as the weight of the bag. The recorded weight is displayed on the screen 19 for the passenger to read. An audio statement may also be produced to announce the recorded weight of the bag.

The recorded weight is also written to an archive 43 provided within the indicator 39, where it is logged against a unique archive number. The logging of a value for the recorded weight only once certain criteria have been met helps to prevent the archive 43 from becoming filled up too quickly by irrelevant data. The archive number is a six digit (or larger) number and each recorded weight is allocated to the next available archive number in turn. Details of the recorded weight and the archive number are sent via the data connection 44 to the computer 31.

As part of the baggage drop procedure using the new kiosk, the passenger may be asked to pay excess baggage fees based on the recorded weight of the one or more bags. The kiosk is provided with the archive 43 to keep a secure record of all the recorded weights. This is because the passenger's primary display for reading the recorded weight is on the screen 19 of the kiosk 10 (the screen 40 of the indicator 39 is unlikely to be visible at all, and if it is, it will only be visible as a secondary display). As the passenger is being requested to make a payment on the basis of the weight that is displayed indirectly on the screen 19 of the kiosk 10, a system must be put in place to record the data so that appropriate compensation can be made in the event of erroneous weight measurements.

The archive number for the recorded weight is communicated to the passenger, so that in the event the load cell 36 is found to have been weighing incorrectly, the archive number can be traced, a corrected weight determined and the passenger reimbursed as necessary. The archive number for each recorded weight is preferably printed on the receipt given to the passenger, and this information may be presented either as the actual archive number or in an encrypted form, for example, as a bar code printed on the receipt. In one embodiment, therefore, a print command corresponding to the archive number (or archive numbers for more than one bag) is transmitted from the computer 31 to the printer 23 via the connection 30. If desired, the archive 43 could record other details, such as the passenger name, the date and time of the recorded weight measurement, the booking reference, and even the payment details of the credit or debit card used to pay the excess baggage fee.

The computer 31 is further provided with a data connection 45 to the internet. In the example shown, a router 46 is provided to access the internet. In addition to the wired data connection 45, the computer 31 can be provided with a connection 47 to a mobile network communications device 48 that is able to send messages via the internet using the mobile networks, such as the 3G network. The primary mode of communication for the computer 31 to the internet might be via the data connection 45, for example, an ADSL line or similar, and the mobile networks communication device 48 provided as a back-up mode of communicating with the internet in the event that there was a problem with the primary mode.

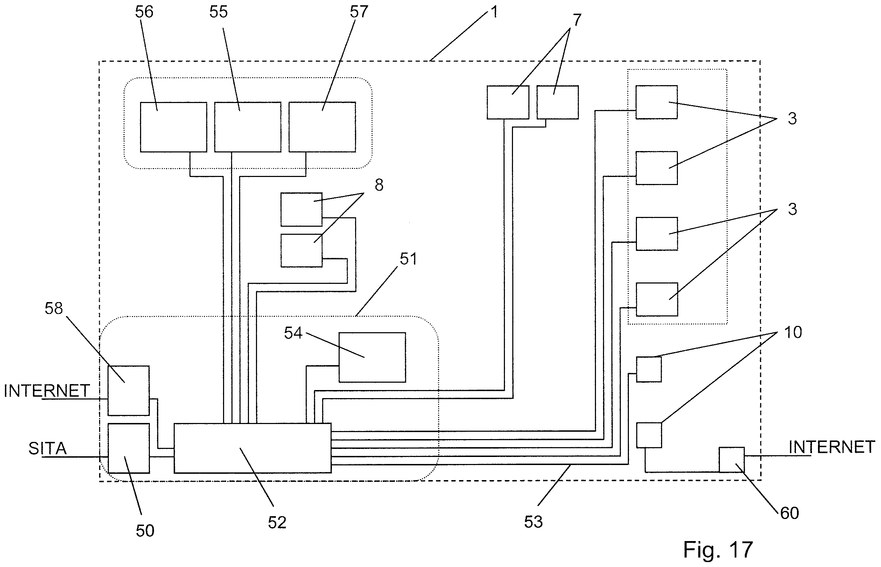

Figure 17 shows a schematic representation of a data network for the departure hall 1 of Figure 14. The network is arranged to receive and send Type B messages across the SITA network through a SITA server 50 located within the airport infrastructure, for example, within a communications room 51. The SITA server 50 is connected to a hub 52, which in practice may be multiple servers and network communication devices that direct the Type B messages to their final destinations. The hub 52 is connected by data connections 53 to each of the manned check-in desks 3, the airline specific self-service check-in kiosks 7 and the CUSS kiosks 8. Within the airport infrastructure connected to the hub 52, sometimes a local departure control system (DCS) 54 is provided, e.g., within the communications room 51. The local DCS 54 could be under the control of and operated by the airport and may be hosted locally or at a remote location. In some airports nowadays, due to the costs associated with running a DCS, a separate legal entity, such as the ground handler, may provide the local DCS 55 for the airport, and this may be connected to the hub 52 using the airport network. This DCS 55 operated by the ground handler may be in addition to or instead of the airport operated local DCS 54. Typically a plurality of DCSs will be controlling the departures for the airlines at any given airport. The ground handler may also have an application server 56 connected to the hub 52 for providing other services, such as the generation of manifests for the above wing and below wing ancillary services. Additional application servers 57 may be connected to the hub 52 for the provision of further services in connection with running the airport. The hub 52 may also be connected by a router 58 to the internet in order to provide web based services for the various companies that wish to operate within the airport infrastructure (i.e., within the airport LAN). The baggage drop kiosks 10 are connected to the hub 52 as shown or connected to a new router 60 that is independent of the existing airport network architecture.

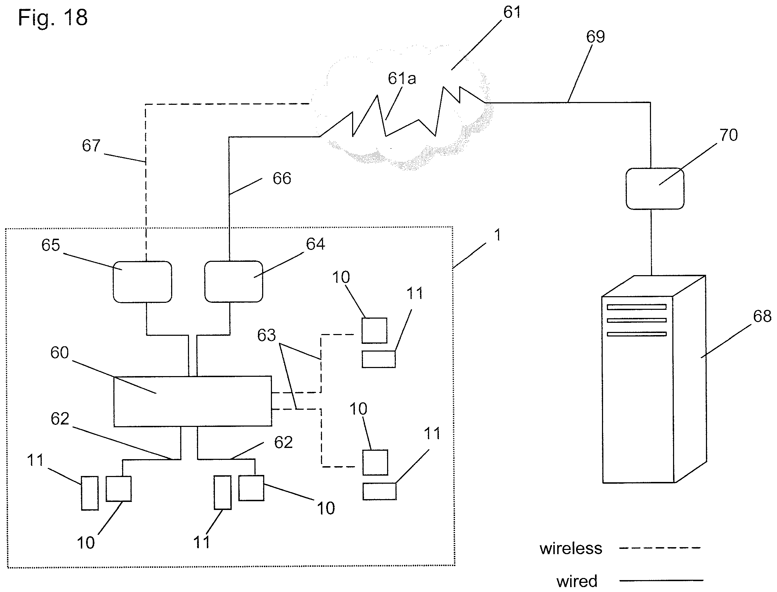

Figure 18 illustrates a simplified representation of the network incorporating the preferred system of the present invention. Figure 18 shows a departure hall 1 having a plurality of the preferred baggage drop kiosks 10 each connected to a weighing device 11 of a check-in desk to provide a baggage drop area. The kiosks are connected to a router 60 that provides a communication link with the internet 61. The kiosks 10 within the departure hall 1 may be connected to one or more of these routers 60, and the router 60 may be an existing router 58 of the airport infrastructure, or it may be an additional router 60 that is provided specifically for the new kiosks 10. A series of communication links 62, 63 are provided for the kiosks 10 to communicate with the router 60. These can be wired communication links 62, for example, data cables feeding electrical or optical signals, or they may be wireless communication links 63 transmitting data via radiowaves, microwaves, or other parts of the electromagnetic spectrum.

In Figure 18, the router 60 is shown providing a hub for the plurality of baggage drop kiosks 10. An alternative arrangement would be to provide individual routers 60 for each or some of the kiosks 10. The important aspect with all of these arrangements, however, is that each kiosk 10 is linked to the internet 61 for the control of its operation; the kiosks 10 do not require a connection to the airport networks, the SITA network or other IATA messaging network in order to print the baggage tags, and are essentially independent of such networks, though of course an additional connection to those networks (or a connection through the airport hub 52) may be provided if desired. As a result, the router 60 may be just a simple router, in contrast to the complex network connection devices provided in the airport's hub.

The router 60 is shown provided with two modes available for connection with the internet 61. The router 60 has a wired connection 64, such as an ADSL line for a broadband connection to the internet 61, that it would use as its primary mode 66 of connection. The router 60 is also provided with a mobile networks communication device 65 for transmitting and receiving data via the internet 61 using the mobile networks, such as the 3G network. The router 60 would select this secondary mode 67 of communication with the internet 61 in the event of a communication failure using the primary mode 66.

The plurality of baggage drop kiosks 10 communicate, via the internet 61, with a remote computer system 68. The remote computer system 68 may be connected to the internet using conventional data connections 69 and exchanges 70. The remote computer system 68 and its interaction with the many other computer systems of the airlines, airports, etc., will be explained in greater detail below.

The baggage drop kiosks 10 of the present invention offer facilities for automatically processing excessive weight of baggage or an excessive number of bags for a plurality of airlines using the common baggage drop.

An example of a baggage drop procedure using the preferred kiosk of the present invention will now be described below. When a passenger approaches the baggage drop kiosk 10, he/she would be greeted by an operator and/or with an introductory screen display. The passenger's boarding pass is scanned using the kiosk's reader.

The details of the airline and the reservation code (e.g., a six or seven digit number made up of letters and numbers) are read from the boarding pass and transmitted from the self-service kiosk 10 to the remote computer system (RCS) 68. Further passenger identifiers may be read from the boarding pass, for example, the seat number allocated to the passenger. The kiosk also includes a code in the message representing the particular airport that the kiosk is located in. These details are transmitted via the internet; not via the SITA network nor any other dedicated network between the reservation systems and DCSs. The RCS 68 looks up the web address for the DCS that the airline uses for that airport from a library of addresses, contacts the selected DCS and requests a copy of the passenger's record for that flight that is stored on the DCS. The DCS returns the passenger's record. Usually, stored in one of the SSR fields, there will be a value for the baggage allowance, for example, a code like "BG18" or "BG20" for an 18 kg bag or a 20 kg bag respectively. Depending on the information stored in the passenger's record, or possibly for every passenger, the RCS 68 may further look up the web address for the airline's reservation system from a library of addresses, contact the airline's reservation server using the internet and transmit the reservation code and a request for the passenger name record (PNR) for the passenger using the kiosk 10. This may be the airline's own Computerised Reservation System (CRS), a Global Distribution System (GDS), or any other reservation system. A response is received from the airline's reservation system and the PNR is transmitted via the internet 61 to the RCS 68. The PNR may comprise up to 34 fields of information and preferably all the available fields are transmitted to the RCS 68. The RCS 68 processes the information in the PNR relating to the passenger and the immediate flight in order to extract the relevant details, in particular the e-ticket information and any baggage details which may be prescribed in the SSRs or other fields.

The passenger places an item of baggage on the weighing device 11, the kiosk 10 weighs the baggage and writes the recorded weight to the archive 43. An archive number for the recorded weight is generated. The recorded weight is also displayed on the screen 19 of the kiosk 10 and may be sent to the RCS 68. The recorded weight can be subtracted from the baggage allowance value. Assuming the passenger has not exceeded their baggage allowance at that point, the recorded weight and/or other information on the screen is displayed in green.

The passenger may then be prompted to weigh a second item of baggage, a second recorded weight will be written to the archive 43 and an archive number will be allocated. This further recorded weight is subtracted from the baggage allowance to determined if the passenger is still within the allowance. The passenger is then prompted for further items of baggage until all of his/her bags have been counted and weighed.

An assessment is made as to whether the passenger's baggage is within or outside his/her baggage allowance and if outside, then the weight of the bag, or more preferably the baggage allowance value with the recorded weight of the bag deducted, i.e., the amount over (and/or other information on the screen) is displayed in red and the value of the excess baggage fee applicable is calculated. The value of the excess baggage fee may be transmitted from the RCS 68 to the kiosk 10 via the internet 61, or a fixed excess baggage fee stored at the kiosk may be used. The excess baggage fee (or fees) is displayed on the screen 19 and the passenger is prompted to pay. If accepted, then the value of the excess baggage fee is sent to the card reader device 21 in order to process the payment. The passenger is prompted to follow a set of instructions (which may be on the screen of the card reader device 21 rather than the screen of the kiosk 19) to complete the transaction. During this step, data is transmitted via the internet 61 to process the transaction in accordance with conventional web-based transaction protocols incorporating security features such as the "chip and pin" technology. A message confirming that the transaction has been successful is received from the card reader device 21 and the validation code is stored to a memory. The screen display also reverts back to green to indicate to the passenger that everything is now in order.

The RCS 68 may update the passenger's reservation on the airline's reservation system, via the internet, by transmitting a command to update the PNR with the new baggage allowance. The DCS is also contacted and a command is transmitted to update the passenger's reservation details on the DCS, to confirm that any necessary excess baggage fees have been paid and to generate baggage tag identification numbers for the baggage. Where necessary, a record of an extra bag may be added to the passenger's reservation details. A message is then transmitted from the RCS 68, via the internet 61, to the kiosk 10 to generate a baggage tag for each bag, and a receipt is printed for the passenger. The receipt includes details of the archive number(s) for the recorded weight(s) stored on the archive 43. A baggage tag or tags is/are attached to the baggage (which may comprise one or more bags, or indeed other items such as sports equipment or bulky items), the baggage is left at the baggage drop area 9 and the passenger proceeds to security and the air-side facilities of the departure terminal.

In addition to the indication of the airline and the reservation code, the kiosk also extracts a passenger identifier. This is preferably the seat number that has been allocated to the passenger, which can be read from the information on the boarding pass. The PNR returned by the airline reservation system will contain the reservation details for other members of a group where it is a group reservation. Similarly the DCS may return a plurality of passenger records where there are more than one passengers travelling under the same reservation code. The passenger identifier assists with the automatic identification of the passenger from such a list of passengers in a group.

Where the passenger is travelling as a member of a group, the kiosk 10 is configured to pool the baggage allowance for the members of the group that are presenting baggage at the kiosk. Each passenger's boarding pass is scanned in turn to prove that they are present and their baggage allowance is extracted automatically from the passenger record or PNR. The allowance is then added to the baggage allowance value, which is displayed on screen. As each bag is weighed, the recorded weight is deducted from the combined baggage allowance value. Where only some of the group are present, for example because some but not all the passengers travelling on a particular reservation have arrived at the airport together, then just the baggage allowances for those passenger's whose boarding passes are scanned are used to provide the combined baggage allowance value.

For example, a reservation with four passengers where each passenger has a baggage allowance of 22 kg, has a combined baggage allowance of 88 kg. If the first passenger drops a bag of 25 kg, then the system allows the kiosk or operator to share the excess kilos within the pooled allowance with the other members of the group. As long as the next three bags of the second, third and fourth passengers do not exceed the total baggage allowance value for all four passengers, then no excess baggage fees are payable. In such a situation, the display preferably stays green for the entire time that the four passengers' baggage is being weighed, even though the first passenger had an over-weight bag. Where the third or fourth passenger's bag exceeds the 88 kg, then the display changes from green to red in order to indicate that the total baggage allowance value has been exceeded.

The remote computer system 68 is able to access the airline's reservation system during a period after online check in has closed, when up to now the only reason for doing so would be to verify details in an individual PNR because of problems arising during the conventional check in. Preferably an access code in the interfacing software is modified from its default, in order to allow access to the airline's reservation system after the last ADL message has been sent out to the DCS, and further to allow the PNR to be updated by the remote computer system 68 during this period.

A copy of the abbreviated passenger record stored on the DCS or the PNR stored on the airline's reservation system is made and sent to the remote computer system 68. This is done at the request of the remote computer system 68 using communications that are sent through the internet, for example, by communicating using encrypted messages that are routed through the internet. In other words, a message cast in accordance with the usual internet protocols, for example, using Secure Sockets Layer (SSL) protocol, is transmitted to the relevant web address of the DCS or airline's reservation system via the internet, the message including a database query statement requesting a copy of the passenger record or PNR for a given reservation code. The message would be routed using standard internet procedures, for example, the router for the remote computer system 68 would determine the best available route for the message through the internet, and the message would be passed from internet router to internet router until it reached its destination router. The message might be split into different packets of data that are sent to the destination router by different routes through the internet. Each packet of data may pass through five or more routers to complete its journey, often more than ten routers, and sometimes fifteen or more routers, in order to pass from one side of the internet to the other, on its way between the remote computer system 68 and the airline's reservation server or the server of the DCS (as indicated by the zig-zag path 61 a through the internet 61 in Figure 18). This is in contrast to dedicated circuits where the message would be sent from a modem (though a router could be used) directly to the modem of the destination server, all packets of data travelling along the same predetermined path, through a circuit that is essentially permanently open. In response, the DCS locates the passenger record or the airline's reservation system locates the PNR and returns a copy of the data fields for that passenger record or PNR in a message, cast in accordance with the usual internet protocols (e.g., an SSL message) that is sent to the web address of the remote computer system via the internet 61. The record is parsed and the relevant data segments are extracted by the remote computer system 68.

A problem recognised by the inventors is that the information that is sent to a given DCS by an airline reservation system while for most airlines it may be sufficient to determine whether the passenger's baggage is within or outside their baggage allowance if it is known what to look for, it is usually insufficient to determine a fee for a new baggage allowance for the passenger if the passenger's baggage is outside their baggage allowance. As the way the baggage information is presented, if at all, will vary considerably from one airline to another, this is why in the present invention, the remote computer system 68 preferably downloads a copy of the PNR. The PNR provides additional information that the remote computer system 68 can analyse and make a judgment on which baggage policy applies to the passenger's ticket. From the full reservation record, the computer system 68 can determine, using a database of baggage allowance policies for different airlines, which baggage allowance should apply for the ticket and any new baggage allowance that would be available for a fee. Thus, the passenger may be offered the opportunity to purchase a new baggage allowance, for example, for additional baggage weight or for an additional bag. Any necessary fees can then be collected via the baggage drop kiosk 10. The remote computer system 68 can then update the PNL/ADL based record for the passenger on the DCS in order to include the new baggage allowance.

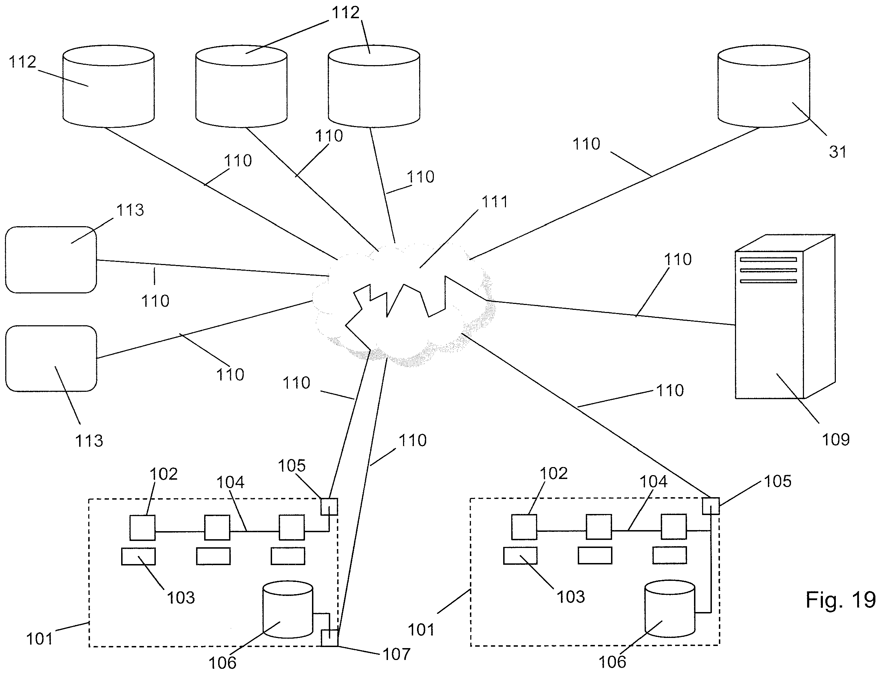

In Figure 19, a schematic representation of a preferred baggage drop system 100 is shown. A first departure hall 101 contains a plurality of baggage drop kiosks 102, each provided with a weighing device 103 and linked by a data communication 104 to a router 105. The first departure hall 101 is shown provided with a local DCS 106 that, in addition to its conventional connection to the private networks (not shown), is also connected to a router 107. A second departure hall 108 also contains a plurality of baggage drop kiosks 102, each provided with a weighing device 103 and linked by a data communication 104 to a router 105. For both departure halls 101, 108, the data communication 104 may be a wired or a wireless connection to the router 107. A local DCS 106 of the second departure hall 108, in addition to its existing connections, shares the same router 107 as the kiosks 102. Although the airports in Figure 19 are shown with a single DCS 106 that is hosted locally, in practice there may be no local DCS, or a local DCS that is hosted remotely, and most likely there will be a mix of several remotely hosted DCSs and one or more local DCSs being used.

The baggage drop kiosks 102 located in the departure halls 101, 108, are linked to a remote computer system 109 by data communications 110 passing messages through the internet 111; the messages are sent using an encryption protocol such as SSL across the internet 111, rather than by using leased lines to an airline reservation system/DCS or other private networks. Each of the baggage drop kiosks 102 is able to communicate with the remote computer system 109 independently using such internet based communications. These can be by means of wired connections or wireless connections, or a mixture of the two.

The remote computer system 109 is the same regardless of which airline the passenger is flying with or the DCS that the airlines uses for that airport. Consequently the interface presented to the passenger is the same regardless of airline. The remote computer system 109 is able to exchange data with a plurality of departure control systems 113 using communications that are sent through the internet. Once the DCS has been identified, the remote computer system can look up the web address for the DCS using its library of web addresses of departure control systems. Similarly, the remote computer system 109, using communications that are sent through the internet, can access a plurality of airline reservation systems 112. Once an identification of the airline has been determined from the boarding pass, the remote computer system looks up a web address for the appropriate reservation system using its library of web addresses of airline reservation systems. Using communications that are sent through the internet, the baggage drop system 100 can also communicate with bank servers 114 to process transactions for excess baggage fees.

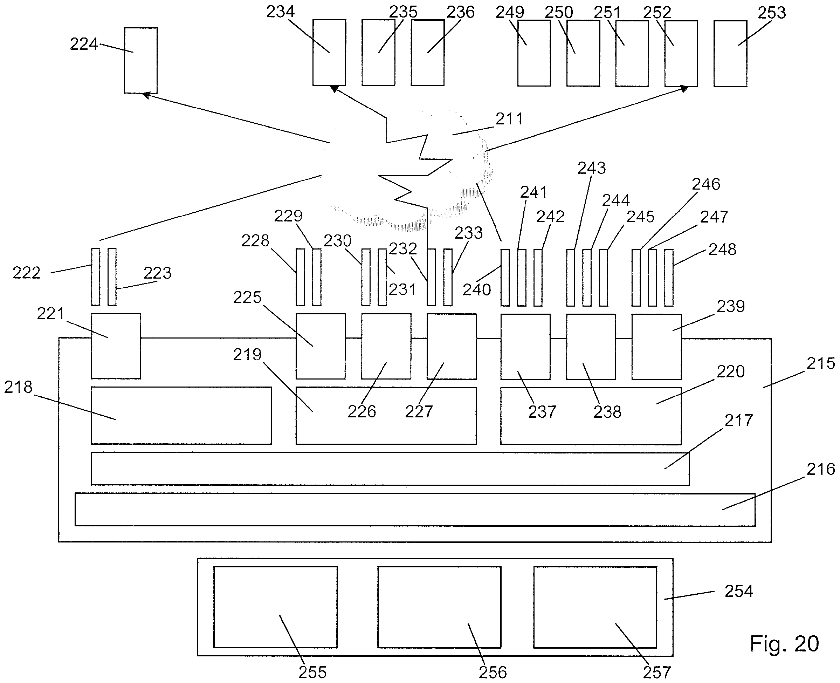

The remote computer system is shown in more detail in Figure 20. It comprises one or more servers 215 running a suite of software products offering web based services for the baggage drop kiosk. The main Passenger Services software 216 provides a platform for the Host Systems APIs 217 supporting a plurality of libraries, for example, a Passenger Management System Library 218 (such as PAXMan), a Reservation Systems Library 219 (providing access details for reservation systems like Navitaire Open Skies, CarmenRez, Amadeus Altea, Navitaire New Skies, etc.) and a Departure Control Systems Library 220 (providing access details for departure control systems like Navitaire Open Skies, Damarel L-DCS, Amadeus Altea, Navitaire New Skies, etc.).

The Passenger Management System Library 218 is provided with an application programming interface (API) 221 (such as CarmeRez API) in order to interface with other programs 222, 223, that can communicate, via the internet, with a passenger management system 224 (such as PAXMAN P5T). The Reservation System Library 219 is coupled to a plurality of APIs 225, 226, 227 in order to interface with other programs 228-233 that can communicate, via the internet, with the respective airline reservation system 234-236. For example, a CarmeRez API 225 may be provided with DisplayReservation 228 and ChangeReservation 229 programs to communicate with the CarmenRez reservation system 234. On the reservation system, these applications may activate a GetPNR program or similar program in order to download the PNR to the remote computer system 209. Similarly, an Amadeus Altea API 226 may be provided with DisplayReservation 230 and ChangeReservation 231 programs to communicate with the Amadeus Altea reservation system 235, and a Navitaire Open Skies API 227 may be provided with DisplayReservation 232 and ChangeReservation 233 programs to communicate with the Navitaire Open Skies reservation system 236. The Departure Control Systems Library 220 is coupled to a plurality of APIs 237, 238, 239 in order to interface with other programs 240-248 that can communicate with the respective departure control systems 249-253. The Navitaire Open Skies API 237 is shown running a RetrieveCheckInFlights 240 program to communicate, via the internet, with the Navitaire Open Skies departure control system 252. Other programs are provided to retrieve and transfer other details to the remote computer system and communicate these with the baggage drop kiosk. Other APIs could be a Damarel L-DCS API 238 and Amadeus Altea API 239. Other departure control systems include the Navitaire New Skies DCS 249, Amadeus Altea DCS 250, Damarel L-DCS - MAG 251 and Damarel L-DCS - BAA 252, representing a selection of the many local and remote based DCSs.

In addition, the baggage drop system includes an Airline Information Service 254 holding Reservation System Profiles 255 (such as user credentials and definitions of how to parse for the airline reservation systems, e.g., Navitaire Open Skies). It also holds Departure Control System Profiles 256 (such as user credentials and definitions of how to parse for the departure control systems, e.g., Navitaire Open Skies, SITA Airport Connect at Geneva (run by Servisair) and SITA Airport Connect at Zurich (run by Swissport)). It also holds Airport Profiles 252 (such as the airport codes, e.g., "EMA", "GEA", "ZUR", etc., and details of the reservation systems and departure control systems that apply).

## Claims

1. A check in system for checking in passengers and/or the passenger's baggage for flights, comprising a kiosk in an airport and a remote computer system, wherein the remote computer system provides web based services that are accessed by the kiosk, the remote computer system comprising one or more servers running a suite of software that includes a plurality of application programming interfaces adapted to interface with different airline reservation systems and departure control systems, the kiosk being provided with a weighing device to weigh the passenger's baggage, the kiosk further being able to communicate with the remote computer system using internet based communications in order to process the check in procedure for a passenger that is checking in on a flight and/or is checking baggage in on a flight, wherein the kiosk has been programmed to present an interface to the passenger during the check in procedure which is the same regardless of the airline or the departure control system the airline has chosen, and after the passenger has identified an airline that he/she is travelling with on the kiosk and a reservation code has been entered, the kiosk is arranged to transmit data comprising an identification of the airline and the reservation code through the internet using the internet based communications in the form of encrypted messages to the remote computer system, and further wherein the remote computer system, on receipt of the airline identification and the reservation code, is arranged to:
identify a reservation system for the airline and look up an internet address for a router of the airline's reservation system by selecting the airline's reservation system from a database holding details of a plurality of reservation systems for more than one airline, the selection being based on the identification of the airline inputted by the passenger;
contact the reservation system for the airline, transmit the reservation code to the airline's reservation system and automatically download data corresponding to the passenger's reservation record using encrypted messages that are sent through the internet, wherein the passenger's reservation record on the airline reservation system is the passenger name record (PNR) and the remote computer system is arranged to download the passenger name record corresponding to the reservation code when downloading the passenger's reservation record;
process the passenger's reservation record automatically, including extracting e-ticket and special service request (SSR) information from the passenger's reservation record for the passenger's flight and processing this e-ticket and SSR information during the checking in process, and, using encrypted messages that are sent through the internet, send prompts to the passenger to confirm details through passenger input at the kiosk, and to prompt the passenger to weigh each of his/her bags, the kiosk being arranged to generate a recorded weight for each item of baggage;
identify a departure control system for an airline and flight, and look up an internet address for a router of the departure control system by selecting a departure control system from a database holding details of a plurality of departure control systems that are used by more than one airline and for more than one airport;
contact the departure control system using encrypted messages that are sent through the internet; and
automatically modify the passenger's reservation record on the airline's reservation system and a record of the passenger stored on the departure control system so as to check in the passenger and/or the passenger's baggage on the flight,
wherein the remote computer system is provided with a library of algorithms defining a plurality of airline baggage policies for different airlines, and the remote computer system is arranged to determine, on the basis of recorded weights transmitted by the kiosk and the e-ticket and SSR information extracted from the passenger's reservation record, whether or not the passenger is within his/her baggage allowance by looking up the algorithm defining the baggage allowance for the airline and ticket type that the passenger is travelling on in the library of algorithms by having regard to the extracted e-ticket and SSR information, applying the recorded weight(s) for each item of baggage to the algorithm, and if outside the baggage allowance, determining the additional baggage allowance required to accommodate the recorded weight(s) of each item of baggage and determining a fee for the additional baggage allowance required, wherein if the remote computer system determines that the passenger has exceeded his/her baggage allowance, the passenger is prompted to pay the fee, and if accepted, then the fee is transmitted to a payment device on the kiosk to process a transaction for the fee for the additional baggage allowance.

2. A check in system as claimed in claims 1, wherein the remote computer system is arranged to check the information contained in the passenger's reservation record and to determine if a passport number and expiry date have been entered, and if not, to prompt the passenger to offer up his/her passport to the reader of the kiosk, the kiosk to read the passport number and expiry date, and the remote computer system to add the passport number and expiry date to the record of the passenger on the departure control system by using encrypted messages that are routed through the internet.

3. A check in system as claimed in claim 2, wherein the remote computer system is arranged to also update the passenger's reservation record on the airline's reservation system by using encrypted messages that are routed through the internet.

4. A check in system as claimed in any preceding claim, wherein the remote computer system is arranged to communicate with the airline's reservation system and download the passenger's reservation record using encrypted messages that are sent through the internet after the airline's reservation system has transmitted a final additions and deletions list (ADL) message for the passenger's flight to the departure control system.

5. A check in system as claimed in claim 4, wherein the remote computer system is arranged to communicate with the departure control system and modify the record of the passenger on the departure control system using encrypted messages that are sent through the internet after the airline's reservation system has transmitted a passenger name list (PNL) for the passenger's flight to the departure control system.

6. A check in system as claimed in any preceding claim wherein the messages are sent in a secure sockets layer communication protocol.

7. A remote computer system for use in the check in system of any preceding claim, comprising one or more servers running a suite of software that provides web based services for access by a kiosk in an airport using communications in the form of encrypted messages that are sent through the internet, wherein the suite of software is arranged to:
on receiving an identification of an airline and a reservation code through the internet from the kiosk, identify a reservation system for the airline and look up an internet address for a router of the airline's reservation system by selecting the airline's reservation system from a database holding details of a plurality of reservation systems for more than one airline, the selection being based on the identification of the airline inputted by the passenger;
contact the airline's reservation system, transmit the reservation code to the airline's reservation system and automatically download data corresponding to a passenger's reservation record, wherein the passenger's reservation record on the airline reservation system is the passenger name record (PNR) and the remote computer system is arranged to download the passenger name record corresponding to the reservation code when downloading the passenger's reservation record;
process the passenger's reservation record automatically including extracting e-ticket and special service request (SSR) information from the passenger's reservation record for the passenger's flight and processing this e-ticket and SSR information during the checking in process, and, using encrypted messages that are sent through the internet, send prompts to the passenger to confirm details through passenger input at the kiosk and to prompt the passenger to weigh each of his/her bags for the kiosk to generate a recorded weight for each item of baggage, the passenger being presented with an interface during the check in procedure which is the same regardless of the airline or the departure control system the airline has chosen;
identify automatically a departure control system for the airline and flight, and look up an internet address for a router of the departure control system by selecting a departure control system from a database holding details of a plurality of departure control systems that are used by more than one airline and for more than one airport;
contact automatically the departure control system using encrypted messages that are sent through the internet; and
modify automatically the passenger's reservation record on the airline's reservation system and a record of the passenger on the departure control system so as to check in the passenger and the passenger's baggage on the flight,
wherein the remote computer system is provided with a library of algorithms defining a plurality of airline baggage policies for different airlines, and the remote computer system is arranged to determine, on the basis of recorded weights transmitted by the kiosk and the e-ticket and SSR information extracted from the passenger's reservation record, whether or not the passenger is within his/her baggage allowance by looking up the algorithm defining the baggage allowance for the airline and ticket type that the passenger is travelling on in the library of algorithms by having regard to the extracted e-ticket and SSR information, applying the recorded weight(s) for each item of baggage to the algorithm, and if outside the baggage allowance, determining the additional baggage allowance required to accommodate the recorded weight(s) of each item of baggage and determining a fee for the additional baggage allowance required, wherein if the remote computer system determines that the passenger has exceeded his/her baggage allowance, the passenger is prompted to pay the fee, and if accepted, then the fee is transmitted to a payment device on the kiosk to process a transaction for the fee for the additional baggage allowance.

8. A computer program product comprising a suite of software for a remote computer system that, when run on the remote computer system, provides web based services for a passenger checking in for a flight or checking in baggage for the flight using a kiosk in an airport, the kiosk being provided with a weighing device to weigh the passenger's baggage, the kiosk further being able to communicate with the remote computer system using internet based communications in the form of encrypted messages to process the check in procedure for a passenger that is checking in on a flight and/or is checking baggage in on a flight, wherein the computer program product is arranged to control the operation of the remote computer system in order to:
on receipt of an identification of an airline and a reservation code through the internet from the kiosk, identify a reservation system for the airline and look up an internet address for a router of the airline's reservation system by selecting the airline's reservation system from a database holding details of a plurality of reservation systems for more than one airline, the selection being based on the identification of the airline inputted by the passenger;
contact the airline's reservation system, transmit the reservation code to the airline's reservation system and automatically download data corresponding to a passenger's reservation record using encrypted messages that are sent through the internet, wherein the passenger's reservation record on the airline reservation system is the passenger name record (PNR) and the remote computer system is arranged to download the passenger name record corresponding to the reservation code when downloading the passenger's reservation record;
process the passenger's reservation record automatically including extracting e-ticket and special service request (SSR) information from the passenger's reservation record for the passenger's flight and processing this e-ticket and SSR information during the checking in process, and, using encrypted messages that are sent through the internet, send prompts to the passenger to confirm details through passenger input at the kiosk and to prompt the passenger to weigh each of his/her bags for the kiosk to generate a recorded weight for each item of baggage, the passenger being presented with an interface during the check in procedure which is the same regardless of the airline or the departure control system the airline has chosen;
identify automatically a departure control system for the airline and flight and look up an internet address for a router of the departure control system by selecting a departure control system from a database holding details of a plurality of departure control systems that are used by more than one airline and for more than one airport;
contact automatically the departure control system using encrypted messages that are sent through the internet; and
modify automatically the passenger's reservation record on the airline's reservation system and a record of the passenger on a departure control system so as to check in the passenger and/or the passenger's baggage on the flight,
wherein the computer program product includes a library of algorithms defining a plurality of airline baggage policies for different airlines, and the remote computer system is arranged to determine, on the basis of recorded weights transmitted by the kiosk and the e-ticket and SSR information extracted from the passenger's reservation record, whether or not the passenger is within his/her baggage allowance by looking up the algorithm defining the baggage allowance for the airline and ticket type that the passenger is travelling on in the library of algorithms by having regard to the extracted e-ticket and SSR information, applying the recorded weight(s) for each item of baggage to the algorithm, and if outside the baggage allowance, determining the additional baggage allowance required to accommodate the recorded weight(s) of each item of baggage and determining a fee for the additional baggage allowance required, wherein if the remote computer system determines that the passenger has exceeded his/her baggage allowance, the passenger is prompted to pay the fee, and if accepted, then the fee is transmitted to a payment device on the kiosk to process a transaction for the fee for the additional baggage allowance.

## Patentansprüche

1. Einchecksystem zum Einchecken von Fluggästen und/oder von Gepäckstücken der Fluggäste für Flüge, umfassend einen Schalter in einem Flughafen und ein Remote-Computersystem, wobei das Remote-Computersystem Dienste auf Web-Basis bereitstellt, auf die vom Schalter aus zugegriffen wird, wobei das Remote-Computersystem einen oder mehrere Server umfasst, die eine Palette an Software laufen lassen, die mehrere Anwendungsprogrammierungsschnittstellen enthält, die als Schnittstelle zu verschiedenen Fluglinienreservierungssystemen und Abfertigungskontrollsystemen adaptiert sind, wobei der Schalter mit einer Wiegevorrichtung versehen ist, um die Gepäckstücke des Fluggasts zu wiegen, wobei der Schalter ferner imstande ist, mit dem Remote-Computersystem mit Hilfe von Kommunikationen auf Internet-Basis zu kommunizieren, um die Eincheckprozedur für einen Fluggast zu verarbeiten, der für einen Flug eincheckt und/oder Gepäckstücke für einen Flug eincheckt, wobei der Schalter programmiert ist, dem Fluggast während der Eincheckprozedur eine Schnittstelle zu präsentieren, welche unabhängig von der Fluglinie oder dem Abfertigungskontrollsystem, das die Fluglinie gewählt hat, dieselbe ist, und sobald der Fluggast am Schalter eine Fluglinie gewählt hat, mit der er reist, und ein Reservierungscode eingegeben wurde, der Schalter eingerichtet ist, Daten, die eine Identifizierung der Fluglinie und den Reservierungscode umfassen, über das Internet mit Hilfe der Kommunikationen auf Internet-Basis in der Form verschlüsselter Nachrichten zum Remote-Computersystem zu übertragen, und wobei das Remote-Computersystem, bei Empfang der Fluglinienidentifizierung und des Reservierungscodes, ausgebildet ist zum:
Identifizieren eines Reservierungssystems für die Fluglinie und Nachsehen einer Internetadresse für einen Router des Fluglinienreservierungssystems durch Wählen des Fluglinienreservierungssystems aus einer Datenbank, die Einzelheiten mehrerer Reservierungssysteme für mehr als eine Fluglinie enthält, wobei die Auswahl auf der vom Fluggast eingegebenen Identifizierung der Fluglinie beruht;
Kontaktieren des Reservierungssystems für die Fluglinie, Senden des Reservierungscodes zum Fluglinienreservierungssystem und automatisch Herunterladen von Daten, die der Reservierungsbestätigung des Fluggasts entsprechen, unter Verwendung verschlüsselter Nachrichten, die über das Internet gesendet werden" wobei die Reservierungsbestätigung des Fluggasts im Fluglinienreservierungssystem der Fluggastdatensatz (Passenger Name Record, PNR) ist und das Remote-Computersystem eingerichtet ist, beim Herunterladen der Reservierungsbestätigung des Fluggasts den Fluggastdatensatz entsprechend dem Reservierungscode herunterzuladen;
automatischen Verarbeiten der Reservierungsbestätigung des Fluggasts, enthaltend ein Entnehmen von Informationen bezüglich E-Ticket und speziellen Serviceanforderungen (Special Service Request, SSR) aus der Reservierungsbestätigung des Fluggasts für den Flug des Fluggastes, und Verarbeiten dieser Informationen bezüglich E-Ticket und SSR während des Eincheckprozesses und, mit Hilfe von verschlüsselten Nachrichten, die über das Internet gesendet werden, Senden von Aufforderungen an den Fluggast, Einzelheiten durch eine Fluggasteingabe am Schalter zu bestätigen, und den Fluggast aufzufordern, jedes seiner Gepäckstücke zu wiegen, wobei der Schalter eingerichtet ist, eine Gewichtsbestätigung für jedes Gepäckstück zu generieren;
Identifizieren eines Abfertigungskontrollsystems für eine Fluglinie und einen Flug und Nachsehen einer Internet-Adresse für einen Router des Abfertigungskontrollsystems durch Auswählen eines Abfertigungskontrollsystems aus einer Datenbank, die Einzelheiten mehrerer Abfertigungskontrollsysteme enthält, die von mehr als einer Fluglinie und für mehr als einen Flughafen verwendet werden;
Kontaktieren des Abfertigungskontrollsystems mit Hilfe von verschlüsselten Nachrichten, die über das Internet gesendet werden; und
automatischen Ändern der Reservierungsbestätigung des Fluggastes im Fluglinienreservierungssystem und einer Fluggastbestätigung, die im Abfertigungskontrollsystem gespeichert ist, um den Fluggast und/oder die Gepäckstücke des Fluggastes für den Flug einzuchecken;
wobei das Remote-Computersystem mit einer Bibliothek von Algorithmen versehen ist, die mehrere Fluglinien-Gepäckbestimmungen für verschiedene Fluglinien festlegen, und das Remote-Computersystem eingerichtet ist, auf der Basis von Gewichtsbestätigungen, die vom Schalter übertragen werden, und der E-Ticket- und SSR-Informationen, die aus der Reservierungsbestätigung des Fluggastes gewonnen werden, zu ermitteln, ob der Fluggast innerhalb seiner Freigepäckbestimmung ist, durch Nachsehen des Algorithmus, der das Freigepäck für die Fluglinie festlegt, und der Art von Ticket, mit der der Fluggast reist, in der Bibliothek von Algorithmen unter Berücksichtigung der gewonnenen E-Ticket- und SSR-Informationen, unter Anwendung der Gewichtsbestätigung(en) für jedes Gepäckstück bei dem Algorithmus, und falls außerhalb der Freigepäckbestimmung, Ermitteln des anfallenden Übergepäcks für die Gewichtsbestätigung(en) für jedes Gepäckstück und Ermitteln einer anfallenden Gebühr für das Übergepäck, wobei, falls das Remote-Computersystem ermittelt, dass der Fluggast sein Freigepäck überschritten hat, der Fluggast aufgefordert wird, die Gebühr zu zahlen, und, falls akzeptiert, die Gebühr zu einer Zahlungsvorrichtung am Schalter übertragen wird, um eine Transaktion für die Gebühr für das Übergepäck zu verarbeiten.

2. Einchecksystem nach Anspruch 1, wobei das Remote-Computersystem eingerichtet ist, die Informationen, die in der Reservierungsbestätigung des Fluggasts enthalten sind, zu prüfen und zu ermitteln, ob eine Reisepassnummer und ein Ablaufdatum eingegeben wurden, und falls nicht, den Fluggast aufzufordern, seinen Reisepass dem Lesegerät des Schalters vorzuweisen, wobei am Schalter die Reisepassnummer und das Ablaufdatum eingelesen werden, und das Remote-Computersystem aufzufordern, die Reisepassnummer und das Ablaufdatum der Fluggastbestätigung im Abfertigungskontrollsystem mit Hilfe von verschlüsselten Nachrichten, die über das Internet geleitet werden, hinzuzufügen.

3. Einchecksystem nach Anspruch 2, wobei das Remote-Computersystem eingerichtet ist, auch die Reservierungsbestätigung des Fluggasts im Fluglinienreservierungssystem mit Hilfe von verschlüsselten Nachrichten, die über das Internet geleitet werden, zu aktualisieren.

4. Einchecksystem nach einem vorangehenden Anspruch, wobei das Remote-Computersystem eingerichtet ist, mit dem Fluglinienreservierungssystem zu kommunizieren und die Reservierungsbestätigung des Fluggasts mit Hilfe von verschlüsselten Nachrichten, die über das Internet gesendet werden, herunterzuladen, nachdem das Fluglinienreservierungssystem eine endgültige Nachricht zu einer Liste von Ergänzungen und Streichungen (Additions and Deletions List, ADL) für den Flug des Fluggasts zum Abfertigungskontrollsystem übertragen hat.

5. Einchecksystem nach Anspruch 4, wobei das Remote-Computersystem eingerichtet ist, mit dem Abfertigungskontrollsystem zu kommunizieren und die Fluggastbestätigung im Abfertigungskontrollsystem mit Hilfe von verschlüsselten Nachrichten, die über das Internet übertragen werden, zu ändern, sobald das Fluglinienreservierungssystem eine Fluggastnamensliste (Passenger Name List, PNL) für den Flug des Fluggasts zum Abfertigungskontrollsystem übertragen hat.

6. Einchecksystem nach einem vorangehenden Anspruch wobei die Nachrichten in einem Secure Sockets Layer Kommunikationsprotokoll gesendet werden.

7. Remote-Computersystem zur Verwendung im Einchecksystem nach einem vorangehenden Anspruch, umfassend einen oder mehrere Server, die eine Palette an Software laufen lassen, die Web-basierte Dienste für einen Zugriff durch einen Schalter in einem Flughafen mit Hilfe von Kommunikationen in der Form verschlüsselter Nachrichten, die über das Internet gesendet werden, vorsieht, wobei die Palette an Software eingerichtet ist zum:
bei Empfang einer Identifizierung einer Fluglinie und eines Reservierungscodes durch das Internet vom Schalter, Identifizieren eines Reservierungssystems für die Fluglinie und Nachsehen einer Internetadresse für einen Router des Fluglinienreservierungssystems durch Wählen des Fluglinienreservierungssystems aus einer Datenbank, die Einzelheiten mehrerer Reservierungssysteme für mehr als eine Fluglinie enthält, wobei die Auswahl auf der vom Fluggast eingegebenen Identifizierung der Fluglinie beruht;
Kontaktieren des Fluglinienreservierungssystems, Übertragen des Reservierungscodes zum Fluglinienreservierungssystem und automatischen Herunterladen von Daten, die einer Reservierungsbestätigung des Fluggasts entsprechen, wobei die Reservierungsbestätigung des Fluggasts im Fluglinienreservierungssystem der Fluggastdatensatz (Passenger Name Record, PNR) ist und das Remote-Computersystem eingerichtet ist, beim Herunterladen der Reservierungsbestätigung des Fluggasts den Fluggastdatensatz entsprechend dem Reservierungscode herunterzuladen;
automatischen Verarbeiten der Reservierungsbestätigung des Fluggasts, enthaltend ein Entnehmen von Informationen bezüglich E-Ticket und speziellen Serviceanforderungen (Special Service Request, SSR) aus der Reservierungsbestätigung des Fluggasts für den Flug des Fluggastes, und Verarbeiten dieser Informationen bezüglich E-Ticket und SSR während des Eincheckprozesses und, mit Hilfe von verschlüsselten Nachrichten, die über das Internet gesendet werden, Senden von Aufforderungen an den Fluggast, Einzelheiten durch eine Fluggasteingabe am Schalter zu bestätigen, und den Fluggast aufzufordern, jedes seiner Gepäckstücke zu wiegen, damit der Schalter eine Gewichtsbestätigung für jedes Gepäckstück generiert, wobei dem Fluggast während der Eincheckprozedur eine Schnittstelle präsentiert wird, die unabhängig von der Fluglinie oder dem Abfertigungssystem, das die Fluglinie gewählt hat, dieselbe ist;
automatischen Identifizieren eines Abfertigungskontrollsystems für die Fluglinie und den Flug und Nachsehen einer Internet-Adresse für einen Router des Abfertigungskontrollsystems durch Auswählen eines Abfertigungskontrollsystems aus einer Datenbank, die Einzelheiten mehrerer Abfertigungskontrollsysteme enthält, die von mehr als einer Fluglinie und für mehr als einen Flughafen verwendet werden;
automatischen Kontaktieren des Abfertigungskontrollsystems mit Hilfe von verschlüsselten Nachrichten, die über das Internet gesendet werden; und
automatischen Ändern der Reservierungsbestätigung des Fluggastes im Fluglinienreservierungssystem und einer Fluggastbestätigung im Abfertigungskontrollsystem, um somit den Fluggast und/oder die Gepäckstücke des Fluggastes für den Flug einzuchecken;
wobei das Remote-Computersystem mit einer Bibliothek von Algorithmen versehen ist, die mehrere Fluglinien-Gepäckbestimmungen für verschiedene Fluglinien festlegen, und das Remote-Computersystem eingerichtet ist, auf der Basis von Gewichtsbestätigungen, die vom Schalter übertragen werden, und der E-Ticket- und SSR-Informationen, die aus der Reservierungsbestätigung des Fluggastes gewonnen werden, zu ermitteln, ob der Fluggast innerhalb seiner Freigepäckbestimmung ist, durch Nachsehen des Algorithmus, der das Freigepäck für die Fluglinie festlegt, und der Art von Ticket, mit der der Fluggast reist, in der Bibliothek von Algorithmen unter Berücksichtigung der gewonnenen E-Ticket- und SSR-Informationen, unter Anwendung der Gewichtsbestätigung(en) für jedes Gepäckstück bei dem Algorithmus, und falls außerhalb der Freigepäckbestimmung, Ermitteln des anfallenden Übergepäcks für die Gewichtsbestätigung(en) für jedes Gepäckstück und Ermitteln einer anfallenden Gebühr für das Übergepäck, wobei, falls das Remote-Computersystem ermittelt, dass der Fluggast sein Freigepäck überschritten hat, der Fluggast aufgefordert wird, die Gebühr zu zahlen, und, falls akzeptiert, die Gebühr zu einer Zahlungsvorrichtung am Schalter übertragen wird, um eine Transaktion für die Gebühr für das Übergepäck zu verarbeiten.

8. Computerprogrammprodukt, umfassend eine Palette an Software für ein Remote-Computersystem, die, wenn sie im Remote-Computersystem läuft, Web-basierte Dienste für ein Einchecken eines Fluggasts für einen Flug oder ein Einchecken von Gepäckstücken für den Flug an einem Schalter in einem Flughafen vorsieht, wobei der Schalter mit einer Wiegevorrichtung versehen ist, um die Gepäckstücke des Fluggasts zu wiegen, wobei der Schalter ferner imstande ist, mit dem Remote-Computersystem mit Hilfe von Kommunikationen auf Internet-Basis zu kommunizieren, um die Eincheckprozedur für einen Fluggast zu verarbeiten, der für einen Flug eincheckt und/oder Gepäckstücke für einen Flug eincheckt, wobei das Computerprogrammprodukt eingerichtet ist, den Betrieb des Remote-Computersystems zu steuern zum:
bei Empfang einer Identifizierung einer Fluglinie und eines Reservierungscodes durch das Internet vom Schalter, Identifizieren eines Reservierungssystems für die Fluglinie und Nachsehen einer Internetadresse für einen Router des Fluglinienreservierungssystems durch Wählen des Fluglinienreservierungssystems aus einer Datenbank, die Einzelheiten mehrerer Reservierungssysteme für mehr als eine Fluglinie enthält, wobei die Auswahl auf der vom Fluggast eingegebenen Identifizierung der Fluglinie beruht;
Kontaktieren des Fluglinienreservierungssystems, Übertragen des Reservierungscodes zum Fluglinienreservierungssystem und automatischen Herunterladen von Daten, die einer Reservierungsbestätigung des Fluggasts entsprechen, unter Verwendung verschlüsselter Nachrichten, die über das Internet gesendet werden, wobei die Reservierungsbestätigung des Fluggasts im Fluglinienreservierungssystem der Fluggastdatensatz (Passenger Name Record, PNR) ist und das Remote-Computersystem eingerichtet ist, beim Herunterladen der Reservierungsbestätigung des Fluggasts den Fluggastdatensatz entsprechend dem Reservierungscode herunterzuladen;
automatischen Verarbeiten der Reservierungsbestätigung des Fluggasts, enthaltend ein Entnehmen von Informationen bezüglich E-Ticket und speziellen Serviceanforderungen (Special Service Request, SSR) aus der Reservierungsbestätigung des Fluggasts für den Flug des Fluggastes, und Verarbeiten dieser Informationen bezüglich E-Ticket und SSR während des Eincheckprozesses und, mit Hilfe von verschlüsselten Nachrichten, die über das Internet gesendet werden, Senden von Aufforderungen an den Fluggast, Einzelheiten durch eine Fluggasteingabe am Schalter zu bestätigen, und den Fluggast aufzufordern, jedes seiner Gepäckstücke zu wiegen, damit der Schalter eine Gewichtsbestätigung für jedes Gepäckstück generiert, wobei dem Fluggast während der Eincheckprozedur eine Schnittstelle präsentiert wird, die unabhängig von der Fluglinie oder dem Abfertigungssystem, das die Fluglinie gewählt hat, dieselbe ist;
automatischen Identifizieren eines Abfertigungskontrollsystems für die Fluglinie und den Flug und Nachsehen einer Internet-Adresse für einen Router des Abfertigungskontrollsystems durch Auswählen eines Abfertigungskontrollsystems aus einer Datenbank, die Einzelheiten mehrerer Abfertigungskontrollsysteme enthält, die von mehr als einer Fluglinie und für mehr als einen Flughafen verwendet werden;
automatischen Kontaktieren des Abfertigungskontrollsystems mit Hilfe von verschlüsselten Nachrichten, die über das Internet gesendet werden; und
automatischen Ändern der Reservierungsbestätigung des Fluggastes im Fluglinienreservierungssystem und einer Fluggastbestätigung im Abfertigungskontrollsystem, um somit den Fluggast und/oder die Gepäckstücke des Fluggastes für den Flug einzuchecken;
wobei das Computerprogrammprodukt eine Bibliothek von Algorithmen enthält, die mehrere Fluglinien-Gepäckbestimmungen für verschiedene Fluglinien festlegt, und das Remote-Computersystem eingerichtet ist, auf der Basis von Gewichtsbestätigungen, die vom Schalter übertragen werden, und der E-Ticket- und SSR-Informationen, die aus der Reservierungsbestätigung des Fluggastes gewonnen werden, zu ermitteln, ob der Fluggast innerhalb seiner Freigepäckbestimmung ist, durch Nachsehen des Algorithmus, der das Freigepäck für die Fluglinie festlegt, und der Art von Ticket, mit der der Fluggast reist, in der Bibliothek von Algorithmen unter Berücksichtigung der gewonnenen E-Ticket- und SSR-Informationen, unter Anwendung der Gewichtsbestätigung(en) für jedes Gepäckstück bei dem Algorithmus, und falls außerhalb der Freigepäckbestimmung, Ermitteln des anfallenden Übergepäcks für die Gewichtsbestätigung(en) für jedes Gepäckstück und Ermitteln einer anfallenden Gebühr für das Übergepäck, wobei, falls das Remote-Computersystem ermittelt, dass der Fluggast sein Freigepäck überschritten hat, der Fluggast aufgefordert wird, die Gebühr zu zahlen, und, falls akzeptiert, die Gebühr zu einer Zahlungsvorrichtung am Schalter übertragen wird, um eine Transaktion für die Gebühr für das Übergepäck zu verarbeiten.

## Revendications

1. Système d'enregistrement pour l'enregistrement de passagers et/ou de bagages des passagers en prévision de vols en avion, comprenant une borne dans un aéroport et un système informatique distant, dans lequel le système informatique distant fournit des services basés sur le Web qui sont accessibles par la borne, le système informatique distant comprenant un ou plusieurs serveurs exécutant une suite de logiciels qui comprend une pluralité d'interfaces de programmation d'applications conçues pour s'interfacer avec différents systèmes de réservations de compagnies aériennes et différents systèmes de contrôle des départs, la borne étant pourvue d'un dispositif de pesage pour peser les bagages des passagers, la borne étant en outre capable de communiquer avec le système informatique distant au moyen de communications basées sur Internet afin de traiter la procédure d'enregistrement pour un passager qui se présente à l'enregistrement sur un vol et/ou qui présente ses bagages à l'enregistrement sur un vol, dans lequel la borne a été programmée pour présenter une interface au passager pendant la procédure d'enregistrement qui est la même indépendamment de la compagnie aérienne ou du système de contrôle des départs que la compagnie aérienne a choisi, et après que le passager a identifié sur la borne une compagnie aérienne avec laquelle il voyage et qu'il a saisi un code de réservation, la borne est agencée pour transmettre par Internet des données comprenant une identification de la compagnie aérienne et le code de réservation au moyen des communications basées sur Internet sous la forme de messages cryptés à destination du système informatique distant, et dans lequel en outre le système informatique distant, à la réception de l'identification de la compagnie aérienne et du code de réservation, est agencé pour :
identifier un système de réservations propre à la compagnie aérienne et rechercher une adresse Internet associée à un routeur du système de réservations de la compagnie aérienne en sélectionnant le système de réservations de la compagnie aérienne dans une base de données contenant des détails d'une pluralité de systèmes de réservations pour plusieurs compagnies aériennes, la sélection étant basée sur l'identification de la compagnie aérienne saisie par le passager ;
contacter le système de réservations propre à la compagnie aérienne, transmettre le code de réservation au système de réservations de la compagnie aérienne et télécharger automatiquement des données correspondant au dossier de réservation du passager au moyen de messages cryptés qui sont envoyés par Internet, dans lequel le dossier de réservation du passager sur le système de réservations de la compagnie aérienne est le dossier nominatif du passager (PNR) et le système informatique distant est agencé pour télécharger le dossier nominatif du passager correspondant au code de réservation lors du téléchargement du dossier de réservation du passager ;
traiter automatiquement le dossier de réservation du passager, ceci comprenant l'extraction des informations de billet électronique et des informations de demandes de services spéciaux (SSR) à partir du dossier de réservation du passager pour le vol du passager ainsi que le traitement de ces informations de billet électronique et ces informations SSR pendant la procédure d'enregistrement, et, au moyen de messages cryptés qui sont envoyés par Internet, envoyer des rappels au passager pour confirmer des détails par des saisies du passager sur la borne, et inviter le passager à peser chacun de ses bagages, la borne étant agencée pour générer un poids enregistré pour chaque bagage ;
identifier un système de contrôle des départs associé à une compagnie aérienne et un vol, et rechercher une adresse Internet associée à un routeur du système de contrôle des départs en sélectionnant un système de contrôle des départs dans une base de données contenant des détails d'une pluralité de systèmes de contrôle des départs qui sont utilisés par plusieurs compagnies aériennes et pour plusieurs aéroports ;
contacter le système de contrôle des départs au moyen de messages cryptés qui sont envoyés par Internet ; et
modifier automatiquement le dossier de réservation du passager sur le système de réservations de la compagnie aérienne et un dossier du passager stocké sur le système de contrôle des départs de façon à enregistrer le passager et/ou les bagages du passager sur le vol,
dans lequel le système informatique distant est doté d'une bibliothèque d'algorithmes définissant une pluralité de politiques de bagages de compagnies aériennes pour différentes compagnies aériennes, et le système informatique distant est agencé pour déterminer, sur la base des poids enregistrés transmis par la borne et sur la base des informations de billet électronique et des informations SSR extraites à partir du dossier de réservation du passager, si le passager est ou non dans les limites de sa franchise de bagages en recherchant l'algorithme définissant la franchise de bagages pour la compagnie aérienne et le type de billet que le passager utilise pour son voyage dans la bibliothèque d'algorithmes en tenant compte des informations de billet électronique et des informations SSR extraites, en appliquant les poids enregistrés pour chaque bagage à l'algorithme et, en cas de dépassement de la franchise de bagages, en déterminant la franchise de bagages supplémentaires requise pour prendre en compte les poids enregistrés de chaque bagage et en déterminant une redevance pour la franchise de bagages supplémentaires requise, dans lequel, si le système informatique distant détermine que le passager a dépassé sa franchise de bagages, le passager est invité à payer la redevance, et s'il accepte, la redevance est transmise à un dispositif de paiement sur la borne pour traiter une transaction correspondant à la redevance pour la franchise de bagages supplémentaires.

2. Système d'enregistrement selon la revendication 1, dans lequel le système informatique distant est agencé pour vérifier les informations contenues dans le dossier de réservation du passager et pour déterminer si un numéro de passeport et une date d'expiration ont été saisis, et si ce n'est pas le cas, inviter le passager à présenter son passeport sur le dispositif lecteur de la borne, faire lire par la borne le numéro de passeport et la date d'expiration et faire ajouter par le système informatique distant le numéro de passeport et la date d'expiration au dossier du passager sur le système de contrôle des départs au moyen de messages cryptés qui sont transmis par Internet.

3. Système d'enregistrement selon la revendication 2, dans lequel le système informatique distant est agencé pour actualiser également le dossier de réservation du passager sur le système de réservations de la compagnie aérienne au moyen de messages cryptés qui sont transmis par Internet.

4. Système d'enregistrement selon une quelconque revendication précédente, dans lequel le système informatique distant est agencé pour communiquer avec le système de réservations de la compagnie aérienne et pour télécharger le dossier de réservation du passager au moyen de messages cryptés qui sont envoyés par Internet après que le système de réservations de la compagnie aérienne a transmis au système de contrôle des départs un message final de liste des ajouts et suppressions (ADL) pour le vol du passager.

5. Système d'enregistrement selon la revendication 4, dans lequel le système informatique distant est agencé pour communiquer avec le système de contrôle des départs et pour modifier le dossier du passager sur le système de contrôle des départs au moyen de messages cryptés qui sont envoyés par Internet après que le système de réservations de la compagnie aérienne a transmis au système de contrôle des départs une liste des noms des passagers (PNL) pour le vol du passager.

6. Système d'enregistrement selon une quelconque revendication précédente, dans lequel les messages sont envoyés selon un protocole de communication SSL (Secure Sockets Layer).

7. Système informatique distant destiné à servir dans le système d'enregistrement selon une quelconque revendication précédente, comprenant un ou plusieurs serveurs exécutant une suite de logiciels qui fournit des services basés sur le Web accessibles par une borne dans un aéroport au moyen de communications sous la forme de messages cryptés qui sont envoyés par Internet, dans lequel la suite de logiciels est agencée pour :
à la réception d'une identification d'une compagnie aérienne et d'un code de réservation envoyés par Internet depuis la borne, identifier un système de réservations propre à la compagnie aérienne et rechercher une adresse Internet associée à un routeur du système de réservations de la compagnie aérienne en sélectionnant le système de réservations de la compagnie aérienne dans une base de données contenant des détails d'une pluralité de systèmes de réservations pour plusieurs compagnies aériennes, la sélection étant basée sur l'identification de la compagnie aérienne saisie par le passager ;
contacter le système de réservations propre à la compagnie aérienne, transmettre le code de réservation au système de réservations de la compagnie aérienne et télécharger automatiquement des données correspondant au dossier de réservation d'un passager, dans lequel le dossier de réservation du passager sur le système de réservations de la compagnie aérienne est le dossier nominatif du passager (PNR) et le système informatique distant est agencé pour télécharger le dossier nominatif du passager correspondant au code de réservation lors du téléchargement du dossier de réservation du passager ;
traiter automatiquement le dossier de réservation du passager, ceci comprenant l'extraction des informations de billet électronique et des informations de demandes de services spéciaux (SSR) à partir du dossier de réservation du passager pour le vol du passager ainsi que le traitement de ces informations de billet électronique et ces informations SSR pendant la procédure d'enregistrement, et, au moyen de messages cryptés qui sont envoyés par Internet, envoyer des rappels au passager pour confirmer des détails par des saisies du passager sur la borne, et inviter le passager à peser chacun de ses bagages pour que la borne génère un poids enregistré pour chaque bagage, le passager se voyant présenter une interface pendant la procédure d'enregistrement qui est la même indépendamment de la compagnie aérienne ou du système de contrôle des départs que la compagnie aérienne a choisi ;
identifier automatiquement un système de contrôle des départs associé à la compagnie aérienne et au vol, et rechercher une adresse Internet associée à un routeur du système de contrôle des départs en sélectionnant un système de contrôle des départs dans une base de données contenant des détails d'une pluralité de systèmes de contrôle des départs qui sont utilisés par plusieurs compagnies aériennes et pour plusieurs aéroports ;
contacter automatiquement le système de contrôle des départs au moyen de messages cryptés qui sont envoyés par Internet ; et
modifier automatiquement le dossier de réservation du passager sur le système de réservations de la compagnie aérienne et un dossier du passager stocké sur le système de contrôle des départs de façon à enregistrer le passager et les bagages du passager sur le vol,
dans lequel le système informatique distant est doté d'une bibliothèque d'algorithmes définissant une pluralité de politiques de bagages de compagnies aériennes pour différentes compagnies aériennes, et le système informatique distant est agencé pour déterminer, sur la base des poids enregistrés transmis par la borne et sur la base des informations de billet électronique et des informations SSR extraites à partir du dossier de réservation du passager, si le passager est ou non dans les limites de sa franchise de bagages en recherchant l'algorithme définissant la franchise de bagages pour la compagnie aérienne et le type de billet que le passager utilise pour son voyage dans la bibliothèque d'algorithmes en tenant compte des informations de billet électronique et des informations SSR extraites, en appliquant les poids enregistrés pour chaque bagage à l'algorithme et, en cas de dépassement de la franchise de bagages, en déterminant la franchise de bagages supplémentaires requise pour prendre en compte les poids enregistrés de chaque bagage et en déterminant une redevance pour la franchise de bagages supplémentaires requise, dans lequel, si le système informatique distant détermine que le passager a dépassé sa franchise de bagages, le passager est invité à payer la redevance, et s'il accepte, la redevance est transmise à un dispositif de paiement sur la borne pour traiter une transaction correspondant à la redevance pour la franchise de bagages supplémentaires.

8. Produit programme informatique comprenant une suite de logiciels pour un système informatique distant qui, lorsqu'elle est exécutée sur le système informatique distant, fournit des services basés sur le Web pour un passager procédant à son enregistrement pour un vol ou à l'enregistrement de ses bagages pour le vol à l'aide d'une borne dans un aéroport, la borne étant équipée d'un dispositif de pesage pour peser les bagages du passager, la borne étant en outre capable de communiquer avec le système informatique distant au moyen de communications basées sur Internet sous la forme de messages cryptés pour traiter la procédure d'enregistrement d'un passager qui procède à son enregistrement sur un vol et/ou à l'enregistrement de ses bagages sur un vol, dans lequel le produit programme informatique est agencé pour commander le fonctionnement du système informatique distant afin de :
à la réception d'une identification d'une compagnie aérienne et d'un code de réservation envoyés par Internet depuis la borne, identifier un système de réservations propre à la compagnie aérienne et rechercher une adresse Internet associée à un routeur du système de réservations de la compagnie aérienne en sélectionnant le système de réservations de la compagnie aérienne dans une base de données contenant des détails d'une pluralité de systèmes de réservations pour plusieurs compagnies aériennes, la sélection étant basée sur l'identification de la compagnie aérienne saisie par le passager ;
contacter le système de réservations de la compagnie aérienne, transmettre le code de réservation au système de réservations de la compagnie aérienne et télécharger automatiquement des données correspondant au dossier de réservation du passager au moyen de messages cryptés qui sont envoyés par Internet, dans lequel le dossier de réservation du passager sur le système de réservations de la compagnie aérienne est le dossier nominatif du passager (PNR) et le système informatique distant est agencé pour télécharger le dossier nominatif du passager correspondant au code de réservation lors du téléchargement du dossier de réservation du passager ;
traiter automatiquement le dossier de réservation du passager, ceci comprenant l'extraction des informations de billet électronique et des informations de demandes de services spéciaux (SSR) à partir du dossier de réservation du passager pour le vol du passager ainsi que le traitement de ces informations de billet électronique et ces informations SSR pendant la procédure d'enregistrement, et, au moyen de messages cryptés qui sont envoyés par Internet, envoyer des rappels au passager pour confirmer des détails par des saisies du passager sur la borne, et inviter le passager à peser chacun de ses bagages pour que la borne génère un poids enregistré pour chaque bagage, le passager se voyant présenter une interface pendant la procédure d'enregistrement qui est la même indépendamment de la compagnie aérienne ou du système de contrôle des départs que la compagnie aérienne a choisi ;
identifier automatiquement un système de contrôle des départs associé à la compagnie aérienne et au vol, et rechercher une adresse Internet associée à un routeur du système de contrôle des départs en sélectionnant un système de contrôle des départs dans une base de données contenant des détails d'une pluralité de systèmes de contrôle des départs qui sont utilisés par plusieurs compagnies aériennes et pour plusieurs aéroports ;
contacter automatiquement le système de contrôle des départs au moyen de messages cryptés qui sont envoyés par Internet ; et
modifier automatiquement le dossier de réservation du passager sur le système de réservations de la compagnie aérienne et un dossier du passager stocké sur le système de contrôle des départs de façon à enregistrer le passager et/ou les bagages du passager sur le vol,
dans lequel le produit programme informatique comprend une bibliothèque d'algorithmes définissant une pluralité de politiques de bagages de compagnies aériennes pour différentes compagnies aériennes, et le système informatique distant est agencé pour déterminer, sur la base des poids enregistrés transmis par la borne et sur la base des informations de billet électronique et des informations SSR extraites à partir du dossier de réservation du passager, si le passager est ou non dans les limites de sa franchise de bagages en recherchant l'algorithme définissant la franchise de bagages pour la compagnie aérienne et le type de billet que le passager utilise pour son voyage dans la bibliothèque d'algorithmes en tenant compte des informations de billet électronique et des informations SSR extraites, en appliquant les poids enregistrés pour chaque bagage à l'algorithme et, en cas de dépassement de la franchise de bagages, en déterminant la franchise de bagages supplémentaires requise pour prendre en compte les poids enregistrés de chaque bagage et en déterminant une redevance pour la franchise de bagages supplémentaires requise, dans lequel, si le système informatique distant détermine que le passager a dépassé sa franchise de bagages, le passager est invité à payer la redevance, et s'il accepte, la redevance est transmise à un dispositif de paiement sur la borne pour traiter une transaction correspondant à la redevance pour la franchise de bagages supplémentaires.
